(19) Europäisches Patentamt
European Patent Office
Office européen des brevets

(11) **EP 4 186 227 B1**

(12) **FASCICULE DE BREVET EUROPEEN**

(45) Date de publication et mention
de la délivrance du brevet:
**18.03.2026 Bulletin 2026/12**

(21) Numéro de dépôt: **21758052.1**

(22) Date de dépôt: **21.07.2021**

(51) Classification Internationale des Brevets (IPC):
*H04N 25/705* (2023.01)   *H04N 25/771* (2023.01)
*G01S 7/4914* (2020.01)   *G01S 7/4915* (2020.01)
*G01S 7/493* (2006.01)   *G01S 17/36* (2006.01)
*H04N 25/58* (2023.01)   *H04N 25/57* (2023.01)

(52) Classification Coopérative des Brevets (CPC):
**G01S 17/36; G01S 7/4914; G01S 7/4915;
G01S 7/493; H04N 25/57; H04N 25/58;
H04N 25/705; H04N 25/771; H04N 25/78**

(86) Numéro de dépôt international:
**PCT/EP2021/070324**

(87) Numéro de publication internationale:
**WO 2022/018113 (27.01.2022 Gazette 2022/04)**

(54) **CAPTEUR POUR MESURE DE DISTANCE PAR TEMPS DE VOL AVEC PIXEL À NOEUDS MEMOIRES MULTIPLES**

FLUGZEITSENSOR FÜR ABSTANDSMESSUNG MIT PIXEL MIT MEHREREN SPEICHERKNOTEN

TIME-OF-FLIGHT SENSOR FOR DISTANCE MEASUREMENT WITH MULTIPLE STORAGE NODES PIXEL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.07.2020 FR 2007701**

(43) Date de publication de la demande:
**31.05.2023 Bulletin 2023/22**

(73) Titulaire: **Teledyne E2V Semiconductors SAS
38120 Saint-Egrève (FR)**

(72) Inventeur: **VILLE, Pierre-Emmanuel
38100 Grenoble (FR)**

(74) Mandataire: **Atout PI Laplace
Immeuble Up On
25 Boulevard Romain Rolland
CS 40072
75685 Paris Cedex 14 (FR)**

(56) Documents cités:
WO-A1-2017/170568   US-A1- 2010 026 838
US-A1- 2016 182 847   US-A1- 2017 227 643

**Description**

La présente invention concerne un capteur d'image à pixels actifs CMOS (en anglais « Complementary Metal Oxide Semi-conductor ») et à nœuds mutiples pour mesure de distance en temps de vol indirect IToF (en anglais « Indirect Time of Flight ») et un procédé de mise en œuvre dudit capteur d'image.

La présente invention concerne également un appareil de mesure de distance en temps de vol indirect IToF d'une scène d'objets bi ou tridimensionnels et un procédé de mise en œuvre dudit appareil de mesure de distance IToF.

L'invention est associée aux problématiques liées à la mise en œuvre d'imageurs CMOS pour mesurer la distance entre un système imageur et divers objets en utilisant la technologie dite « indirect time-of-flight ».

La technologie IToF « indirect time-of-flight », appliquée aux capteurs CMOS, requiert la mesure avec différents déphasages d'une information lumineuse réfléchie par un objet ou cible visé. Cette information lumineuse est générée par une source synchronisée avec grande précision avec le capteur d'image. En combinant différents échantillons déphasés, provenant d'une ou plusieurs captures, il est possible via l'utilisation d'algorithmes de déterminer la distance dudit objet visé.

La distance mesurée ne dépend pas du niveau de signal reçu, mais de l'écart de signal mesuré entre plusieurs échantillons déphasés, capturés dans les mêmes conditions (i.e. sur un même temps d'intégration). Cependant le rapport signal à bruit obtenu dépend du niveau du signal mesuré. Pour obtenir la meilleure précision sur cette distance mesurée, il faut maximiser le rapport signal à bruit sur les échantillons déphasés tout en conservant leurs écarts relatifs. Cependant cela est difficile à réaliser avec une seule capture d'image (i.e. un seul temps d'intégration) du fait de la très grande dynamique des scènes observées.

Les plages de distance minimale et maximale entre les objets observés et le système de mesure, combinées avec les réflectivités des différents matériaux constituant les sujets visés, contribuent à l'augmentation de la dynamique requise pour correctement imager une scène capturée dans ce type d'applications. En effet, les sources lumineuses des systèmes IToF sont dimensionnées en termes de puissance d'émission, en fonction de la distance maximale à mesurer, et des réflectivités des objets visés.

L'augmentation de la dynamique adressable par le capteur d'image est donc essentielle pour avoir la meilleure répétabilité (en anglais « precision ») de la mesure de distance en termes de vol indirect IToF, étant remarqué que la répétabilité d'une mesure est à distinguer de la justesse (en anglais « accuracy ») d'une mesure.

Pour augmenter la dynamique d'un imageur CMOS, il est possible suivant un premier type de procédé de combiner plusieurs captures d'images réalisées avec différents temps d'exposition. Mais l'obtention de chacune de ces images requiert une conversion analogique / digitale sur la pleine résolution. Ce premier type de procédé présente plusieurs inconvénients :

    .- la conversion analogique / digitale des données en pleine résolution est une opération coûteuse en temps ;
    .- le volume de données qui doivent être gérées peut devenir très important pour le système en charge d'exploiter les données de l'imageur, si le nombre de captures devient important ;
    .- des artefacts de cohérence spatiale peuvent apparaître dans le cas d'objets en mouvement

Pour augmenter la dynamique d'un imageur CMOS, il est également possible suivant un deuxième type de procédé d'augmenter au niveau du pixel la capacité électronique des nœuds mémoires. Cependant des limites physiques sont vite atteintes en fonction du nombre de nœuds mémoires et de la taille du pixel. De plus, l'augmentation de la capacité des nœuds mémoires peut poser des problèmes sur la sensibilité globale de l'imageur CMOS et sur son bruit de lecture. Ainsi l'imageur CMOS aura besoin de plus de lumière pour atteindre le même signal en sortie.

Pour augmenter la dynamique d'un imageur CMOS, il est également possible suivant un troisième type de procédé de combiner au niveau du capteur CMOS plusieurs informations de temps d'exposition et faire appel à de la compression pour maintenir la résolution en sortie de l'imageur. Ce troisième type de procédé a le désavantage de fournir une réponse non-linéaire complexifiant l'utilisation des données au niveau système.

De manière générale, la problématique de maximisation de la plage dynamique accessible par un imageur CMOS requiert de multiples compromis entre :

    .- le pas (en anglais « pitch ») du pixel et la capacité de stockage du ou des nœud(s) mémoire(s) d'un pixel en lien avec la sensibilité générale d'un pixel ;
    .- le volume des données transmises par l'imageur ;
    .- la fréquence maximale d'acquisition par l'imageur ; et
    .- la linéarité de la réponse fournie.

Dans le cas d'une extension de cette problématique aux applications IToF en temps vol indirect, la dynamique intrinsèque de la scène observée se retrouve alors augmentée du fait de l'ajout d'une information lumineuse nécessaire à la mesure. La répétabilité de la mesure IToF en temps de vol indirect est directement dépendante du rapport signal à bruit sur les informations de phasage capturées.

La solution idéale devrait permettre à la fois de:

    .- maximiser le rapport signal à bruit (sans saturation) des différents nœuds mémoires pour chacun des pixels ;

.- conserver une bonne sensibilité au niveau pixel en limitant la capacité de stockage des nœuds mémoires pour un pas de pixel donné ;

.- limiter le volume des données transmises par l'imageur au minimum ;

.- maximiser la vitesse d'acquisition en réduisant le nombre de conversion des données (sur la pleine résolution) et la durée d'exposition ;

.- ne pas faire appel à de la compression pour conserver une réponse linéaire.

Le document US 2016/182847 enseigne le principe d'effectuer des mesures non-destructives des nœuds mémoires d'un capteur d'image matriciel afin d'inhiber l'exposition avant qu'une situation de saturation ne soit atteinte, mais n'enseigne pas comment mettre en pratique un tel principe sans complexité excessive.

Le document US 2017/227643 A1 divulgue un pixel de mesure de distance par temps de vol. Le pixel comprend des nœuds mémoires multiples. L'impulsion réfléchie n'étant plus de forme carrée, les photo-charges sont stockées successivement dans les nœuds mémoires pour multiplier les échantillons et réduire l'erreur de mesure de la différence de phase.

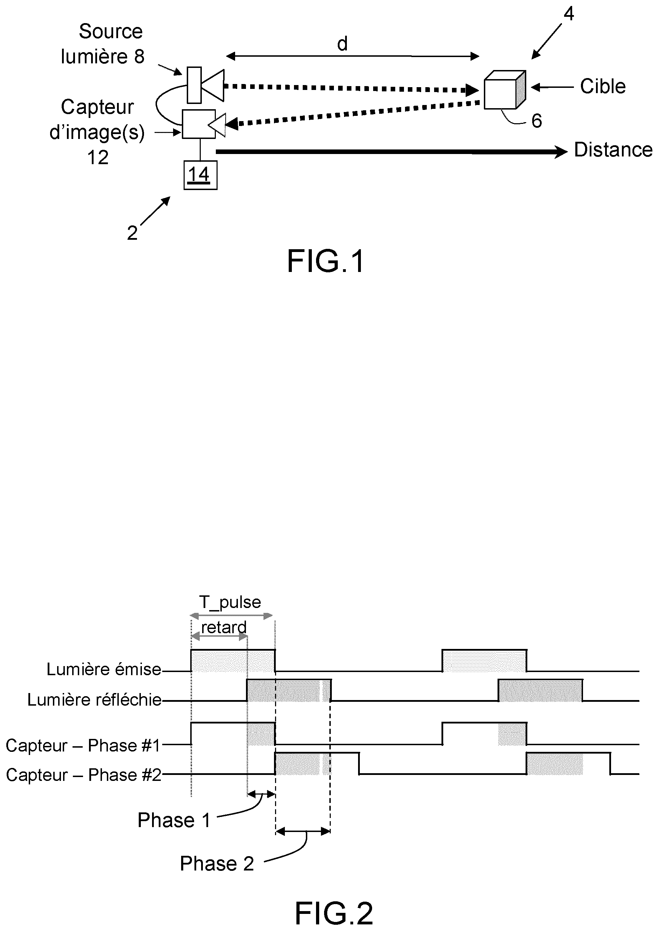

Le document US 2010/0268938 A1 divulgue un pixel comprenant un point mémoire pouvant être chargé ou déchargé par un signal. L'intégration est réinitialisée en fonction des tensions lues de manière non destructives au terme d'intervalles de temps divisant la période d'intégration (fig. 2). Le but est d'éviter la saturation du pixel.

Le problème technique que résout l'invention est de trouver une architecture d'imageur CMOS, adaptée à la mesure distance avec la technologie « indirect time-of-flight » et qui satisfait de manière cumulative les exigences de maximisation de la plage de dynamique accessible par ledit imageur CMOS.

Le concept de base de l'invention est fondé sur l'architecture d'un imageur CMOS qui optimise l'exposition indépendamment pour chacun des pixels, maximise le rapport signal à bruit sur chacun des pixels, et qui ne procède à la conversion et la transmission sur la pleine résolution que d'une seule image dans le cas d'une acquisition image sans double échantillonnage corrélé CDS externe (en anglais « Correlated Double Sampling), ou de deux images dans le cas d'une acquisition image avec double échantillonnage corrélé CDS externe.

A cet effet, l'invention a pour objet un capteur d'image à pixels actifs CMOS et à nœuds mémoires multiples pour mesure de distance en temps de vol indirect IToF (en anglais « Indirect Time of Flight ») d'une scène observée d'objets réfléchissants comprenant :

.- un ensemble d'un nombre entier Nk, supérieur ou égal à 1, de pixel(s) actif(s) CMOS Pix#k, k variant de 1 à Nk, ayant chacun une zone photosensible PhDk et un nombre entier M, supérieur ou égal à 2, de nœuds mémoires $MN_{k,m}$, m variant de 1 à M ;

.- un sous-système de lecture image des M nœuds mémoires $MN_{k,m}$ de chaque pixel Pix#k, k variant de 1 à Nk, pour établir par conversion analogique numérique, Nk fois M valeurs numériques, représentatives de quantités de charges générées par les zones photosensibles PhDk, k variant de 1 à Nk, et intégrées par les M nœuds mémoires $MN_{k,m}$ pendant une durée image d'exposition du pixel, inférieure ou égale à une durée image d'exposition maximale prédéterminée Tmax_exp, et fournir en sortie les M fois Nk valeurs numériques lues;

.- un sous-système de prétraitement image configuré pour appliquer des traitements numériques auxdites valeurs numériques fournies en sortie par le sous-système de lecture image et envoyer des données d'images prétraitées de niveau pixel à un système applicatif de détermination de temps de vol indirect IToF d'une scène observée ;

le capteur image étant caractérisé en ce qu'il comprend :

.- un sous-système de lecture rapide des Nk fois M nœuds mémoires $MN_{k,m}$ et de contrôle de d'un mécanisme d'inhibition de l'exposition des Nk pixels Pix#k, configuré pour, sur chacun des Nk pixels Pix#k, k variant de 1 à Nk, réaliser pendant un cycle actuel Cycle_acq#k,s d'acquisition d'une image des Nk pixels du capteur, un nombre entier Nr prédéterminé de lectures rapides non destructives FCr, r variant de 0 à Nr-1, des tensions présentes sur les M nœuds mémoires $MN_{k,m}$ , m variant de 1 à M, et après chaque lecture rapide FCr, déterminer un signal d'inhibition de l'exposition du pixel Pix#k, à partir d'un critère de décision de poursuivre ou non l'exposition du pixel Pix#k, le critère de décision étant fonction des valeurs de tensions lues de manière non destructives sur les M nœuds mémoires $MN_{k,m}$ après ladite lecture rapide FCr ; et

.- dans chaque pixel Pix#k, au moins un transistor d'inhibition de l'exposition du pixel et un point mémoire pouvant être chargé ou déchargé par ledit signal d'inhibition du pixel Pix#k afin d'activer ou désactiver le mécanisme d'inhibition du pixel en pilotant son ou ses transistors d'inhibition..

Selon des modes particuliers de réalisation, le capteur d'image(s) à pixels actifs CMOS et à nœuds mémoires multiples pour mesure de distance en temps de vol indirect IToF comprend l'une ou plusieurs des caractéristiques suivantes :

.- chaque pixel Pix#k, k variant de 1 à Nk, est configuré pour faire intégrer par ses M nœuds mémoires $MN_{k,m}$, m variant de 1 à M, les charges électriques générées par la zone photosensible PhDk pendant r intervalles élémentaires d'intégration INTr, r variant de 0 à Nr-1, chaque intervalle élémentaire d'intégration INTr étant suivi d'une lecture rapide FCr des M nœud mémoires $MN_{k,m}$ et d'une réévaluation du critère de décision d'inhibition, et les r intervalles d'intégration INTr, distribués dans le cycle actuel Cycle_acq#s d'acquisition d'une image de pixel, ont respectivement des durées élémentaires Tr telles que la somme des durées élémentaires d'intégration Tr, r variant de 0 à Nr-1, est égale à la durée image d'exposition maximale prédéterminée Tmax_exp ;

.- les durées élémentaires Tr, r variant de 0 à Nr, sont égales à une même valeur ; ou au moins deux durées élémentaires prises parmi l'ensemble des valeurs Tr, r variant de 0 à Nr-1 sont différentes et la distribution des valeurs Tr, r variant de 0 à Nr-1 est choisi de sorte à rendre maximale la dynamique du capteur ;

.- le capteur d'image comporte un séquenceur d'activation de phases d'un ensemble de phases mises en œuvre au cours du cycle actuel Cycle_acq#s au travers l'envoi de commandes aux Nk pixels, k variant de 1 à Nk, au sous-système de lecture rapide des Nk fois M nœuds mémoires $MN_{k,m}$ et de contrôle du mécanisme d'inhibition de l'exposition des Nk pixels Pix#k, au sous-système de prétraitement image, ledit ensemble de phases comprenant :

.* pour chaque pixel Pix#k, k variant de 1 à Nk, des phases de réinitialisation (Reset ou Rst) de la zone photosensible PhDk et des M nœuds mémoires $MN_{k,m}$, m variant de 1 à M, des phases de lecture rapide non destructive des M nœuds mémoires (FCr), une phase d'exposition initiale (exp0) du pixel Pix#k suivie d'un premier nombre Nr1(k,s) de phase(s) de maintien de l'exposition (Exp) du pixel Pix#k puis d'un nombre Nr2(k,s) de phase(s) d'inhibition (Blocked) de l'exposition du pixel Pix#k, la somme des nombres Nr1(k,s) et Nr2(k, s) étant égale à Nr-1, et d'une phase de lecture image (Read) du pixel Px#k ; et

.* les phases de réinitialisation (Reset ou Rst) des zones photosensibles PhDk et des M nœuds mémoires $MN_{k,m}$, k variant de 1 à Nk et m variant de 1 à M sont exécutées en même temps à chaque acquisition d"image s suivant un mode d'obturation global (« Global Shutter ») des Nk pixels du capteur d'image ;

.- pour chaque pixel Pix#k, k variant de 1 à Nk, une lecture image est effectuée après une phase de réinitialisation de la zone photosensible PhDk et des M nœuds mémoires $MN_{k,m}$, m variant de 1 à M, ladite lecture image étant utilisée pour la réalisation d'un CDS externe ;

.- chaque pixel Pix#k, k variant de 1 à Nk, configuré suivant une même architecture, comporte : la zone photosensible PhDk ; un transistor T1k de réinitialisation de la zone photosensible PhDk en début de chaque cycle d'acquisition d'une image et au début ou à la fin de chaque cycle de micro-intégration, le premier transistor T1k étant commandé par un signal de réinitialisation global RPhk commun aux Nk pixels de l'ensemble des pixels ; M nœuds mémoires $MN_{k,m}$, m variant de 1 à M, de stockage partagé sur M voies de stockage $VS_{k,m}$ les charges générées par la zone photosensible PhDk, et intégrées en parallèle pendant la durée d'exposition du pixel Pix#k correspondante au cycle actuel Cycle_acq#k,s d'acquisition d'une image ; un dispositif de blocage synchrone de l'exposition du pixel Pix#k commun aux différents M nœuds mémoires Mk,m, m variant de 1 à M ; un dispositif d'activation de l'accès du pixel Pix#k au sous-système de lecture rapide des Nk fois M nœuds mémoires et de contrôle du mécanisme d'inhibition des Nk pixels et au sous-système de lecture image des M nœuds mémoires du pixel Pix#k via M conducteurs d'accès indépendants de lecture $COL_{k,m}$, m variant de 1 à M, et une voie d'accès de commande d'inhibition $COL_{k,IM}$ ;

.- pour chaque pixel Pix#k, k variant de 1 à NK, chaque voie de de stockage $VS_{k,m}$, m variant de 1 à M, des charges générées par la zone photosensible PhDk comporte : un transistor de transfert de charges $T2_{k,m}$, configuré pour vider dans le nœud mémoire $MN_{k,m}$ les charges générées pendant la durée image d'exposition du pixel Pix#k, et commandé par un signal de commande de transfert de charges $TRA_{k,m}$ ; un transistor $T3_{k,m}$ de réinitialisation du nœud mémoire $MN_{k,m}$, configuré pour réinitialiser le potentiel du nœud mémoire $MN_{k,m}$ au début du cycle actuel Cycle_acq#k,s d'une image , et commandé par un signal de réinitialisation par un signal RST commun à l'ensemble des Nk pixels ;

.- un transistor $T4_{k,m}$ de lecture du nœud mémoire $MN_{k,m}$ monté en suiveur et configuré pour reporter de sa grille vers sa source le niveau de potentiel du nœud mémoire $MN_{k,m}$ ; et un transistor de sélection $T5_{k,m}$ , relié à la source du transistor $T4_{k,m}$ de lecture du nœud mémoire $MN_{k,m}$ , configuré pour reporter vers le conducteur d'accès $COL_{k,m}$ en lecture par le sous-système de lecture image des M nœuds mémoires du pixel Pi#k le potentiel du nœud mémoire $MN_{k,m}$ de charges, et commandé par un signal de commande $SEL_k$ d'accès au pixel Pix#k ; pour chaque pixel Pix#k, k variant de 1 à Nk, le dispositif de blocage synchrone de l'exposition du pixel Pix#k, commun aux différents M nœuds mémoires $MN_{k,m}$ , m variant de 1 à M, est configuré pour moduler les signaux de commande TRA$_{k,m}$ , m variant de 1 à M, de transfert des charges générées pendant la durée image d'exposition du pixel Pix#k, par un signal modulant commun d'inhibition du transfert des charges par les transistors de transfert de charges T2$_{k,m}$, activé lorsque le sous-système de lecture rapide des Nk fois M nœuds mémoires et de contrôle du mécanisme d'inhibition des Nk pixels a décidé suite aux valeurs lues lors des lectures rapides non destructives antérieures de ne pas poursuivre l'exposition du pixel, et maintenu jusqu'à la lecture pleine du pixel, et comporte, pour chaque voie VS$_{k,m}$ , m variant de 1 à M, de stockage des charges générées par la zone photosensible PhDk, un transistor TI$_{k,m}$ d'inhibition du signal de commande de transfert de charges TRA$_{k,m}$ ;

.- pour chaque pixel Pix#k, k variant de 1 à Nk, le dispositif de blocage synchrone de l'exposition du pixel Pix#k, commun aux différents M nœuds mémoires MN$_{k,m}$ , m variant de 1 à M, est configuré pour moduler l'évacuation des charges des générées par la zone photosensible PhDk pendant la durée image d'exposition du pixel Pix#k vers un nœud commun de liaison des M transistors de transfert de charges T2$_{k,m}$, m variant de 1 à M, par un signal modulant commun d'inhibition de l'évacuation des charges vers ledit nœud commun de liaison, activé lorsque le sous-système de lecture rapide des Nk fois M nœuds mémoires et de contrôle du mécanisme d'inhibition des Nk pixels a décidé suite aux valeurs lues lors des lectures rapides non destructives antérieures de ne pas poursuivre l'exposition du pixel Pix#k, et maintenu jusqu'à la lecture pleine du pixel, et comporte, monté en parallèle du transistor T1k de réinitialisation de la zone photosensible PhDk , un transistor TI$_{k,m}$ d'inhibition de l'évacuation des charges générées par la zone photosensible PhDk vers ledit nœud commun ;

.- les Nk pixels, k variant de 1 à Nk, sont agencés sous une forme matricielle 54 suivant un nombre entier Nl, supérieur ou égal à 2, de ligne(s), et un nombre entier Nc, supérieur ou égal à 2, de colonnes, Nk étant égal au produit de Nc et Nl ; et le capteur d'image comprend en outre un décodeur de lignes , configuré pour faire accéder ligne par ligne sur des fenêtres temporelles prédéterminées, en même temps les pixels d'une même ligne l aux ressources du traitement du sous-système de lecture image pleine résolution et du sous-système de lecture rapide et non destructif des Nc fois M nœuds mémoires MN$_{k,m}$ et de contrôle du mécanisme d'inhibition de l'exposition des Nc pixels de ladite même ligne l, et de mutualiser ainsi les ressources de traitement du sous-système de lecture image pleine résolution et du sous-système de lecture rapide et de contrôle du mécanisme d'inhibition de l'exposition des pixels colonne par colonne.

L'invention a également pour objet un appareil de mesure de distance en temps de vol indirect IToF d'une scène d'objets bi ou tridimensionnelle comprenant : une source émettrice d'une série d'impulsions de lumière ; un capteur d'image(s) à pixels actifs CMOS et à nœuds mémoires multiples tel que défini ci-dessus pour convertir les impulsions lumineuses réfléchies par les objets de la scène en des données de pixels caractérisant une ou plusieurs images ; et un bloc de traitement des données des pixels de la ou des images pour déterminer un champ de profondeurs des objets de la scène vue depuis un emplacement où se trouve la source émettrice et le capteur d'image(s).

L'invention a également pour objet un procédé de mise en œuvre d'un capteur d'image(s) à pixels actifs CMOS et à nœuds mémoires multiples pour mesure de distance en temps de vol indirect IToF d'une scène observée, le capteur d'image comprenant : un ensemble d'un nombre entier Nk, supérieur ou égal à 1, de pixel(s) actif(s) CMOS Pix#k, k variant de 1 à Nk, ayant chacun une zone photosensible PhDk et un nombre entier M, supérieur ou égal à 2, de nœuds mémoires MN$_{k,m}$ , m variant de 1 à M ; un sous-système de lecture rapide non destructive des Nk fois M nœuds mémoires MN$_{k,m}$ et de contrôle du mécanisme d'inhibition de l'exposition des Nk pixels Pix#k, mis en œuvre pendant l'acquisition d'une image par les Nk pixels ; un sous-système de lecture image des M nœuds mémoires MN$_{k,m}$ de chaque pixel Pix#k, k variant de 1 à Nk ; un sous-système de prétraitement image ; le capteur image étant caractérisé en ce qu'il comprend :

un sous-système de lecture rapide non destructive des Nk fois M nœuds mémoires MN$_{k,m}$ et de contrôle du mécanisme d'inhibition de l'exposition des Nk pixels Pix#k.

Le procédé de mise en œuvre du capteur image pendant l'acquisition d'une image comprend des étapes au cours desquelles : le sous-système de lecture image lit les M nœuds mémoires MN$_{k,m}$ de chaque pixel Pix#k, k variant de 1 à Nk, établit par conversion analogique numérique, Nk fois M valeurs numériques, représentatives de quantités de charges générées par les zones photosensibles PhDk, k variant de 1 à Nk, et intégrées par les M nœuds mémoires MN$_{k,m}$ pendant une durée image d'exposition du pixel, inférieure ou égale à une durée image d'exposition maximale prédéterminée Tmax_exp, et fournit en sortie les M fois Nk valeurs numériques lues ;et le sous-système de prétraitement image applique des traitements numériques auxdites valeurs numériques fournies en sortie par le sous-système de lecture image et envoie des données d'images prétraitées de niveau pixel à un système applicatif de détermination de temps de vol indirect IToF d'une scène observée.

Le procédé de mise en œuvre du capteur image est caractérisé en ce que le sous-système de lecture rapide non destructive des Nk fois M nœuds mémoires $MN_{k,m}$ et de contrôle du mécanisme d'inhibition de l'exposition des Nk pixels Pix#k, sur chacun des Nk pixels Pix#k, k variant de 1 à Nk, réalise pendant un cycle actuel Cycle_acq#k,s d'acquisition d'une image s, un nombre entier Nr prédéterminé de lectures rapides non destructives FCr, r variant de 0 à Nr-1, des tensions présentes sur les M nœuds mémoires $MN_{k,m}$, m variant de 1 à M, et après chaque lecture rapide FCr, détermine un signal d'inhibition de l'exposition du pixel Pix#k, à partir d'un critère de décision de poursuivre ou non l'exposition du pixel Pix#k, le critère de décision étant fonction des valeurs de tensions lues de manière non destructives sur les M nœuds mémoires $MN_{k,m}$ après ladite lecture rapide FCr et d'un ou plusieurs seuil de décision.

L'invention sera mieux comprise à la lecture de la description de plusieurs formes de réalisation qui va suivre, donnée uniquement à titre d'exemple et faite en se référant aux dessins sur lesquels :

[Fig. 1] est une vue illustrant le principe de fonctionnement général de la technologie IToF appliquée à un capteur d'image(s) CMOS selon l'invention ;

[Fig. 2] est une vue d'un exemple d'algorithme à deux phases de détermination de la distance séparant un objet visé ou cible d'une scène bi ou tridimensionnelle observée et le capteur d'image(s) CMOS selon l'invention ;

[Fig. 3] est une vue d'un capteur d'image(s) CMOS formé d'un nombre Nk de pixels agencés suivant un mode préféré de réalisation matricielle avec des colonnes et des lignes, ce mode de réalisation étant généralisable à un capteur d'image(s) CMOS formé d'un ensemble de Nk pixels selon l'invention ;

[Fig. 4] est une vue suivant un premier mode de réalisation d'un pixel et de son environnement, intégrés dans le capteur d'image(s) de la Figue 3, et plus généralement dans un capteur d'image(s) selon l'invention ;

[Fig. 5] est un ordinogramme du procédé de mise en œuvre du capteur d'image CMOS selon l'invention de la Figure 3 ;

[Fig. 6] est une vue d'un exemple de séquencement du principe au niveau pixel du capteur d'image(s) CMOS de la Figure 4 ;

[Fig. 7] est une vue de la séquence d'acquisition d'une image complète au niveau d'un seul pixel ;

[Fig. 8] est une vue du principe de fonctionnement du critère de décision en lien avec les lectures rapides non destructives et de son action sur un mécanisme d'inhibition de l'exposition intégré à chaque pixel;

[Fig. 9] est une vue comparative des évolutions du flux de trames et de données en fonction du nombre de configurations de temps d'exposition nécessaire pour une bonne couverture de la dynamique de scène (i.e. une gestion HDR (en anglais « High Dynamic Range »)), dans le cas d'un capteur d'image(s) classique et d'un capteur d'image(s) CMOS selon l'invention.

[Fig.10] est une vue comparative des évolutions du flux de trames et de données en fonction de la durée de conversion rapide dans le cas d'un capteur d'image(s) classique et d'un capteur d'image(s) CMOS selon l'invention ;

[Fig.11] est une vue suivant un deuxième mode de réalisation d'un pixel et de son environnement, intégré dans le capteur d'image(s) de la Figure 3, et plus généralement dans un capteur d'image(s) selon l'invention, dans laquelle le mécanisme d'inhibition pilote la réinitialisation de la zone photo-sensible des pixels Im au lieu des transistors de transfert.

Suivant la Figure 1, le principe de base mesure de distance en temps de vol indirect d'une scène d'objets bi ou tridimensionnelle par un appareil de mesure selon l'invention est décrit.

Un appareil de mesure 2 selon l'invention est configuré pour mesurer des distances en temps de vol indirect IToF d'objets ou cibles faisant partie d'une scène observée bi ou tridimensionnelle 4. Sur la Figure 1, un seul objet 6 est représenté pour simplifier l'illustration.

L'appareil de mesure 2 selon l'invention comprend une source émettrice de lumière 8, un capteur d'image(s) 12 selon l'invention, et un bloc de traitement IToF 14 des données image des pixels.

La source de lumière 8 est configurée pour éclairer la scène observée 4 et émettre une série ou un train d'impulsions de lumière.

Le capteur d'image(s) 12 selon l'invention est un capteur d'image(s) à pixels actifs CMOS et à nœuds multiples, configuré pour convertir les impulsions lumineuses, réfléchies par les objets de la scène, en particulier l'objet 6, en des données de pixels caractérisant une ou plusieurs images.

Le bloc de traitement IToF des données image des pixels, fournies par le capteur d'image(s) 12, est configuré pour déterminer un champ de profondeurs des objets de la scène vue depuis un emplacement où se trouvent la source émettrice de lumière 8 et le capteur d'image(s) 12 selon l'invention.

Le principe de base de la technologie IToF appliquée aux capteurs CMOS est fondé sur la mesure avec différents déphasages d'une information lumineuse réfléchie par un objet 6 ou cible visé. Cette information lumineuse est générée par la source lumineuse 8 synchronisée avec grande précision avec le capteur d'image(s) 12. En combinant les différents échantillons déphasés, il est possible via l'utilisation d'algorithmes de déterminer la distance d dudit objet visé. Le train des impulsions lumineuses émis par la source lumineuse 8 est caractérisé par la durée unitaire d'une impulsion, désignée par « T_pulse » et un rapport cyclique de répétition de l'impulsion. En variante, l'information lumineuse peut être générée à partir d'une modulation sinusoïdale de la lumière.

Suivant la Figure 2 et à titre d'exemple, un algorithme à deux phases de détermination de la distance d séparant un objet visé ou cible 6 et le capteur d'image(s) CMOS 12 selon l'invention est illustré. La distance séparant un objet réfléchissant observé du capteur, désignée par d, est fournie par l'équation suivante :

$$d = \frac{C * T\_pulse}{2} * \frac{Phase2}{Phase1 + Phase2}$$

dans laquelle

c désigne la célérité de la lumière, « T_pulse » désigne la durée d'une impulsion, « phase1 » désigne le signal intégré sur la durée d'un premier intervalle temporel, délimité par le front montant reçu par le capteur 12 d'une impulsion réfléchie par l'objet 6 et le front descendant de l'impulsion correspondante émise par la source lumineuse 8, motif pouvant être répété plusieurs fois pour accumuler plus de signal, et « phase 2 » désigne le signal intégré sur la durée d'un deuxième intervalle temporel, délimité par le front descendant reçu par le capteur 12 de la même impulsion réfléchie et le front descendant de l'impulsion correspondante émise par la source lumineuse 8, motif pouvant être répété plusieurs fois pour accumuler plus de signal.

De manière générale, l'architecture d'un capteur d'image(s) selon l'invention est une architecture synchrone qui permet une prise d'images correctement exposées d'une scène à dynamique très élevée en utilisant un dispositif de contrôle de l'exposition indépendant pour chacun des pixels, chacun des pixels comportant plusieurs nœuds mémoires, i.e. un nombre supérieur ou égal à deux de nœuds. Cette architecture est particulièrement adaptée pour une utilisation avec la technologie « indirect Time-Of-Flight » car elle permet de maximiser la répétabilité de la mesure pour chaque pixel.

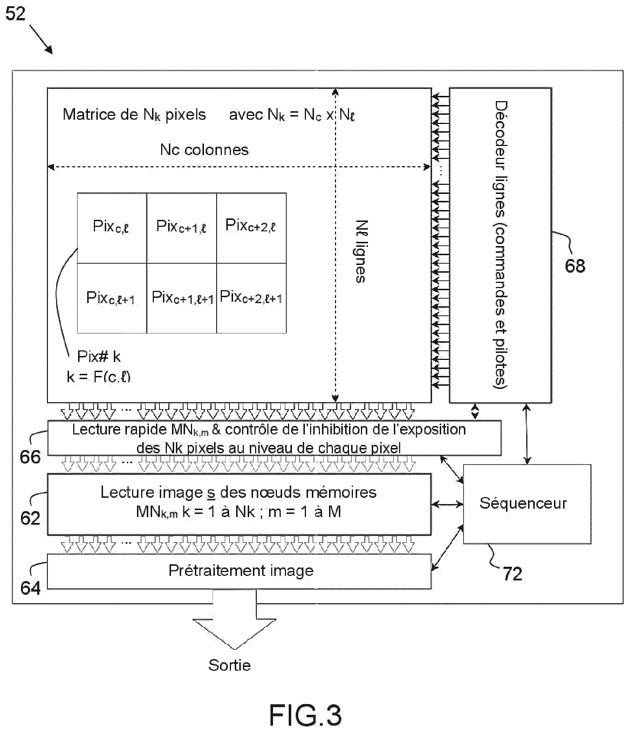

Suivant la Figure 3, un capteur d'image(s) CMOS 52 selon l'invention un ensemble d'un nombre entier Nk, supérieur ou égal à 1, de pixel(s) actif(s) CMOS Pix#k, k variant de 1 à Nk, ayant chacun une zone photo-sensible PhDk, réalisée par exemple par une photodiode, et un nombre entier M, supérieur ou égal à 2, de nœuds mémoires $MN_{k,m}$ , m variant de 1 à M.

Suivant la Figure 3, et de manière particulière, les Nk pixels, k variant de 1 à Nk, sont agencés sous une forme matricielle 54 suivant un nombre entier NI, supérieur ou égal à 2, de ligne(s) 56, et un nombre entier Nc, supérieur ou égal à 2, de colonnes 58, Nk étant égal au produit de Nc et NI. Chaque pixel Pix(c, I) de la matrice est repéré dans la matrice et identifié de manière propre par un couple d'indices (c, I), dans lequel c et I désignent respectivement l'indice c de la colonne et I l'indice de la ligne auxquelles appartient le pixel Pix(c,I).

Une correspondance biunivoque F étant définie entre d'une part l'ensemble des couples d'indices (c,I), l'indice de colonne c variant de 1 à Nc et l'indice de ligne variant de 1 à NI, et d'autre part l'ensemble des entiers de 1 à Nk, chaque pixel Pix(c, I) peut être noté suivant cette correspondance Pix#F(x,I) ou Pix#k avec k égal à F(c,I).

Chaque pixel actif CMOS Pix#k, k variant de 1 à Nk, comporte une zone photo-sensible PhDk et un nombre entier M, supérieur ou égal à 2, de nœuds mémoires $MN_{k,m}$ , m variant de 1 à M.

Le capteur d'image(s) CMOS 52 comporte:

.- un sous-système de lecture image pleine résolution 62 des M nœuds mémoires $MN_{k,m}$ de chaque pixel Pix#k, k variant de 1 à Nk, pour établir par conversion analogique numérique, Nk fois M valeurs numériques, représentatives de quantités de charges générées par les zones photo-sensibles PhDk, k variant de 1 à Nk, et intégrées par les M noeuds mémoires $MN_{k,m}$ pendant une durée image d'exposition du pixel, inférieure ou égale à une durée image d'exposition maximale prédéterminée Tmax_exp, et fournir en sortie les M fois Nk valeurs numériques lues;

.- un sous-système de pré-traitement d'image 64 configuré pour appliquer des traitements numériques auxdites valeurs numériques fournies en sortie par le sous-système de lecture image 62 et envoyer des données d'images prétraitées de niveau pixel à un système applicatif de détermination de temps de vol indirect IToF d'une scène observée.

Le capteur d'image(s) CMOS 52 comprend également :

.- un sous-système de lecture rapide et non destructif 66 des Nk fois M nœuds mémoires $MN_{k,m}$ , et de contrôle de l'inhibition de l'exposition des Nk pixels Pix#k, configuré pour, sur chacun des Nk pixels Pix#k, k variant de 1 à Nk, réaliser pendant un cycle actuel Cycle_acq#k,s d'acquisition d'une image des Nk pixels du capteur, un nombre entier Nr prédéterminé de lectures rapides non destructives FCr, r variant de 0 à Nr-1, des tensions présentes sur les M nœuds mémoires $MN_{k,m}$ , m variant de 1 à M, et après chaque lecture rapide FCr, déterminer un signal d'inhibition de l'exposition du pixel Pix#k, à partir d'un critère de décision de poursuivre ou non l'exposition du pixel Pix#k, le critère de décision étant fonction des valeurs de tensions lues de manière non destructives sur les M nœuds mémoires $MN_{k,m}$ après ladite lecture rapide FCr.

Le capteur d'image(s) CMOS 52 comprend de manière spécifique à l'architecture matricielle lignes-colonne de la Figure 3 un décodeur de lignes 68 qui permet aux pixels d'une même ligne, sur des fenêtres temporelles prédéterminées, d'accéder exclusivement aux ressources du traitement du sous-système de lecture image pleine résolution 62 et du sous-système 66 de lecture rapide et non destructif des Nk fois M nœuds mémoires $MN_{k,m}$ et de contrôle de l'inhibition de l'exposition des Nk pixels de ladite même ligne, et de mutualiser les ressources du traitement du sous-système de lecture image pleine résolution 62 et du sous-système 66 de lecture rapide et de contrôle de l'inhibition de l'exposition des pixels.

Le capteur d'image(s) CMOS 52 comprend un séquenceur 72 d'activation de phases au cours du cycle actuel Cycle_acq#s au travers l'envoi de commandes aux Nk pixels, k variant de 1 à Nk, au sous-système de lecture rapide des Nk fois M nœuds mémoires $MN_{k,m}$ et de contrôle de l'inhibition de l'exposition des Nk pixels Pix#k, au sous-système de pré-traitement image et de manière spécifique à l'architecture de la Figure 3.

De manière générale, un capteur d'image(s) selon l'invention, à pixels actifs CMOS et à nœuds mémoires multiples, pour mesure de distance en temps de vol indirect IToF d'une scène observée d'objets réfléchissants comprend :

    .- un ensemble d'un nombre entier Nk, supérieur ou égal à 1, de pixel(s) actif(s) CMOS Pix#k, k variant de 1 à Nk, ayant chacun une zone photo-sensible PhDk et un nombre entier M, supérieur ou égal à 2, de nœuds mémoires $MN_{k,m}$ , m variant de 1 à M ;
    .- un sous-système de lecture image des M nœuds mémoires $MN_{k,m}$ de chaque pixel Pix#k, k variant de 1 à Nk, pour établir par conversion analogique numérique, Nk fois M valeurs numériques, représentatives de quantités de charges générées par les zones photo-sensibles PhDk, k variant de 1 à Nk, et intégrées par les M noeuds mémoires $MN_{k,m}$ pendant une durée image d'exposition du pixel, inférieure ou égale à une durée image d'exposition maximale prédéterminée Tmax_exp, et fournir en sortie les M fois Nk valeurs numériques lues;
    .- un sous-système de pré-traitement image configuré pour appliquer des traitements numériques auxdites valeurs numériques fournies en sortie par le sous-système de lecture image et envoyer des données d'images prétraitées de niveau pixel à un système applicatif de détermination de temps de vol indirect IToF d'une scène observée.

De manière générale, le capteur image est caractérisé en ce qu'il comprend :

    .- un sous-système de lecture rapide des Nk fois M nœuds mémoires $MN_{k,m}$ et de contrôle de l'inhibition de l'exposition des Nk pixels Pix#k, configuré pour, sur chacun des Nk pixels Pix#k, k variant de 1 à Nk, réaliser pendant un cycle actuel Cycle_acq#k,s d'acquisition d'une image des Nk pixels du capteur, un nombre entier Nr prédéterminé de lectures rapides non destructives FCr, r variant de 0 à Nr-1, des tensions présentes sur les M nœuds mémoires $MN_{k,m}$ , m variant de 1 à M, et après chaque lecture rapide FCr, déterminer un signal d'inhibition de l'exposition du pixel Pix#k, à partir d'un critère de décision de poursuivre ou non l'exposition du pixel Pix#k, le critère de décision étant fonction des valeurs de tensions lues de manière non destructives sur les M nœuds mémoires $MN_{k,m}$ après ladite lecture rapide FCr.

Chaque pixel Pix#k, k variant de 1 à Nk, est configuré pour faire intégrer par ses M nœuds mémoires $MN_{k,m}$, m variant de 1 à M, les charges électriques générées par la zone photo-sensible PhDk pendant r intervalles élémentaires d'intégration INTr, r variant de 0 à Nr-1, chaque intervalle élémentaire d'intégration INTr étant suivi d'une lecture rapide FCr des M nœuds mémoires $MN_{k,m}$ et d'une réévaluation du critère de décision d'inhibition (sauf pour la dernière phase d'intégration Nr-1). Les Nr intervalles d'intégration INTr, distribués dans le cycle actuel Cycle_acq#s d'acquisition d'une image de pixel, ont respectivement des durées élémentaires Tr telles que la somme des durées élémentaires d'intégration Tr, r variant de 0 à Nr-1, est égale à la durée image d'exposition maximale prédéterminée Tmax_exp.

Les durées élémentaires Tr, r variant de 0 à Nr, peuvent être égales à une même valeur.

En variante, au moins deux durées élémentaires prises parmi l'ensemble des valeurs Tr, r variant de 0 à Nr-1 sont différentes et la distribution des valeurs Tr, r variant de 0 à Nr-1 est choisi de sorte à rendre maximale la dynamique du capteur.

De manière générale, le capteur d'image(s) CMOS selon l'invention comporte un séquenceur d'activation de phases d'un ensemble de phases mises en œuvre au cours du cycle actuel Cycle_acq#s au travers l'envoi de commandes aux Nk pixels, k variant de 1 à Nk, au sous-système de lecture rapide des Nk fois M nœuds mémoires $MN_{k,m}$ et de contrôle de l'inhibition de l'exposition des Nk pixels Pix#k, au sous-système de pré-traitement image, ledit ensemble de phases comprenant :

    .- pour chaque pixel Pix#k, k variant de 1 à Nk, des phases de réinitialisation (Reset ou Rst) de la zone photo-sensible PhDk et des M nœuds mémoires $MN_{k,m}$, m variant de 1 à M, des phases de lecture rapide non destructive des M nœuds mémoires (FCr), une phase d'exposition initiale (exp0) du pixel Pix#k suivie d'un premier nombre Nr1(k,s) de phase(s) de maintien de l'exposition (Exp) du pixel Pix#k puis d'un nombre Nr2(k,s) de phase(s) d'inhibition (Blocked) de l'exposition du pixel Pix#k, la somme des nombres Nr1 (k,s) et Nr2(k, s) étant égale à Nr-1, et d'une phase de lecture image (Read) du pixel Px#k ; et
    .- les phases de réinitialisation (Reset ou Rst) des zones photo-sensibles PhDk et des M nœuds mémoires $MN_{k,m}$, k variant de 1 à Nk et m variant de 1 à M sont exécutées en même temps à chaque acquisition d'image suivant un mode d'obturation global (« Global Shutter ») des Nk pixels du capteur d'image.

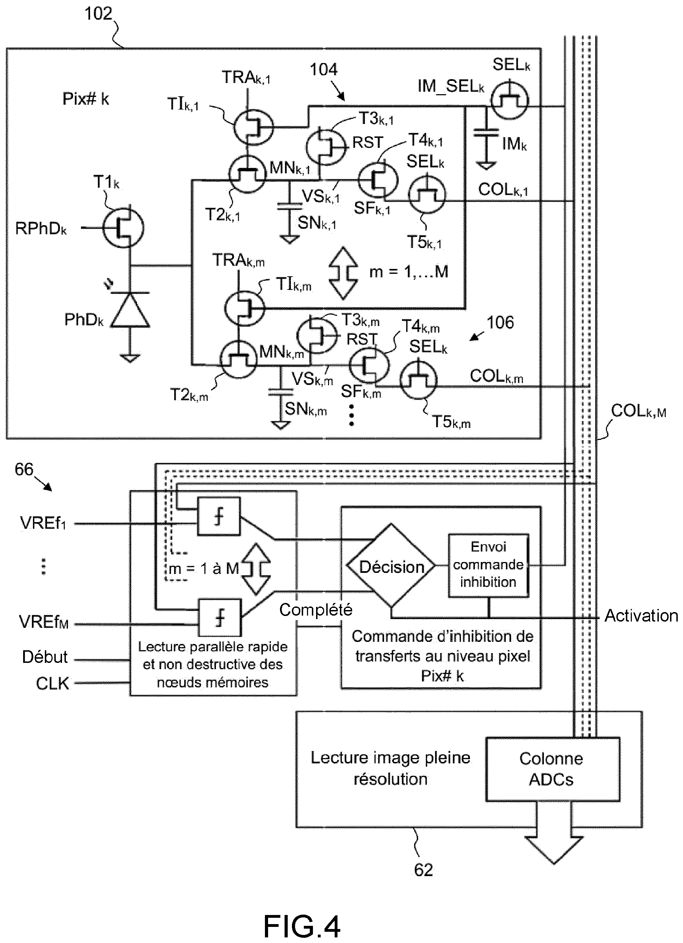

Suivant la Figure 4 et un premier mode de réalisation d'un pixel Pix#k et de son environnement, intégrés dans le capteur d'image(s) de la Figue 3, et plus généralement dans un capteur d'image(s) selon l'invention, chaque pixel Pix#k, k variant de 1 à Nk, est intégré dans une architecture de capteur d'image(s) à base de convertisseurs analogiques-numériques de lecture image à pleine résolution en colonnes, chaque pixel Pix#k, k variant de 1 à Nk, ayant un même nombre M de nœuds mémoires.

Chaque pixel Pix#k, k variant de 1 à Nk, un seul pixel 102 étant représenté de manière générique sur la Figure 4, est configuré suivant une même architecture générique, et comporte :

.- la zone photo-sensible PhDk,

.- un transistor T1k de réinitialisation de la zone photo-sensible PhDk en début de chaque cycle d'acquisition d'une image et au début ou à la fin de chaque cycle ou intervalle de micro-intégration (i.e. encore chaque intervalle élémentaire d'intégration INTr, r variant de 0 à Nr-1), le premier transistor T1k étant commandé par un signal de réinitialisation global RPhk commun aux Nk pixels de l'ensemble des pixels ;

.- M nœuds mémoires $MN_{k,m}$, m variant de 1 à M, de stockage partagé sur M voies de stockage $VS_{k,m}$ les charges générées par la zone photo-sensible PhDk, et intégrées en parallèle pendant la durée d'exposition du pixel Pix#k correspondante au cycle actuel Cycle_acq#k,s d'acquisition d'une image ;

.- un dispositif de blocage synchrone de l'exposition du pixel Pix#k 104 commun aux différents M nœuds mémoires Mk,m, m variant de 1 à M ;

.- un dispositif d'activation de l'accès du pixel Pix#k 106 au sous-système de lecture rapide des Nk fois M nœuds mémoires et de contrôle de l'inhibition des Nk pixels et au sous-système de lecture image des M nœuds mémoires du pixel Pix#k via M conducteurs d'accès indépendants de lecture $COL_{k,m}$, m variant de 1 à M, et une voie d'accès de commande d'inhibition $COL_{k,IM}$.

Le transistor T1k, k variant de 1 à Nk, sert à réinitialiser la zone photosensible PhDk au début de la séquence de capture, mais également au début ou à la fin de chaque fenêtre (en anglais « gating ») de micro intégration (i.e. chaque intervalle élémentaire d'intégration INTr) pour évacuer les charges photo-générées en dehors des intervalles temporels d'intégration à considérer pour le signal utile. En effet, ces charges parasites stockées doivent être évacuées car elles forment un bruit supplémentaire qui ne doit pas être accumulé.

Pour chaque pixel Pix#k 102, k variant de 1 à NK, chaque voie de de stockage $VS_{k,m}$, m variant de 1 à M, des charges générées par la zone photo-sensible PhDk comporte :

.- un transistor de transfert de charges $T2_{k,m}$, configuré pour vider dans le nœud mémoire $MN_{k,m}$ les charges générées pendant la durée image d'exposition du pixel Pix#k, et commandé par un signal de commande de transfert de charges $TRA_{k,m}$ ;

.- un transistor $T3_{k,m}$ de réinitialisation du nœud mémoire $MN_{k,m}$, configuré pour réinitialiser le potentiel du nœud mémoire $MN_{k,m}$ au début du cycle actuel Cycle_acq#k,s d'une image , et commandé par un signal de réinitialisation par un signal RST commun à l'ensemble des Nk pixels ;

.- un transistor $T4_{k,m}$ de lecture du nœud mémoire $MN_{k,m}$ monté en suiveur et configuré pour reporter de sa grille vers sa source le niveau de potentiel du nœud mémoire $MN_{k,m}$ ; et

.- un transistor de sélection $T5_{k,m}$, relié à la source du transistor $T4_{k,m}$ de lecture du nœud mémoire $MN_{k,m}$, configuré pour reporter vers le conducteur d'accès $COL_{k,m}$ en lecture par le sous-système de lecture image des M nœuds mémoires du pixel Pix#k le potentiel du nœud mémoire $MN_{k,m}$ de charges, et commandé par un signal de commande SELk d'accès au pixel Pix#k.

Suivant la Figure 4 et le premier mode de réalisation du pixel 102, pour chaque pixel Pix#k 102, k variant de 1 à Nk, le dispositif de blocage 104 synchrone de l'exposition du pixel Pix#k, commun aux différents M nœuds mémoires $MN_{k,m}$, m variant de 1 à M,

.- est configuré pour moduler les signaux de commande $TRA_{k,m}$, m variant de 1 à M, de transfert des charges générées pendant la durée image d'exposition du pixel Pix#k, par un signal modulant commun d'inhibition du transfert des charges par les transistors de transfert de charges $T2_{k,m}$, activé lorsque le sous-système de lecture rapide des Nk fois M nœuds mémoires et de contrôle de l'inhibition des Nk pixels a décidé suite aux valeurs lues lors des lectures rapides non destructives antérieures de ne pas poursuivre l'exposition du pixel, et maintenu jusqu'à la lecture pleine du pixel, et

.- comporte, pour chaque voie $VS_{k,m}$, m variant de 1 à M, de stockage des charges générées par la zone photo-sensible PhDk, un transistor $TI_{k,m}$ d'inhibition du signal de commande de transfert de charges $TRA_{k,m}$.

Un critère de décision est défini en fonction de l'application pour laquelle le capteur est utilisé. Ce critère est basé par exemple sur les résultats des conversions rapides des différents nœuds mémoires pour évaluer s'il faut poursuivre ou non l'exposition du pixel. Ce critère peut être, par exemple, un seuillage par rapport à une tension configurable, par exemple commune à toutes les colonnes, le rendant positif dès qu'un des nœuds mémoires stocke un signal supérieur à la tension de référence, négatif sinon. Ce critère peut être comme illustré sur la Figure 4, un seuillage par rapport à plusieurs à plusieurs tensions configurables, différentes en fonction des colonnes de lecture des nœuds mémoires.

Suivant la Figure 4, le dispositif de blocage synchrone de l'exposition du pixel Pix#k 104 ou mécanisme d'inhibition de l'exposition du pixel prend la forme d'un point mémoire d'inhibition $IM_k$ (en anglais « Inhibitor Memory ») filtrant ou non les signaux de commande des transistors de transferts des charges accumulées dans la zone photosensible vers les nœuds mémoires ou signaux $TRA_{k,m}$, m variant de 1 à M. Ce filtrage s'opère vers des transistors d'inhibition $TI_{k,m}$ (en anglais « Transfer Inhibitor ») positionnés sur les lignes des signaux de commandes des transistors de transferts $TRA_{k,m}$, m variant de 1 à M..

Le point mémoire IMk du mécanisme d'inhibition est accédé via le transistor commandé par le transistor de sélection de ligne $SEL_k$. Lorsqu'il est sélectionné, le point mémoire $IM\_SEL_k$ peut être chargé ou déchargé, afin de désactiver ou d'activer le mécanisme d'inhibition de l'exposition sur le pixel concerné en pilotant ses transistors d'inhibition $TI_{k,m}$, m variant de 1 à M.

En résumé, le capteur d'image(s) CMOS 102, suivant le premier mode de réalisation de la Figure 4 et ses variantes, comprend :

un ensemble d'un nombre entier Nk, supérieur ou égal à un, de pixel(s) avec une architecture spécifique de type à obturation électronique globale (en anglais « global shutter »), incluant pour chaque pixel Pix#k, k variant de 1 à Nk, un dispositif de blocage synchrone de l'exposition 104, commun aux différents nœuds mémoires $MN_{k,m}$, m variant de 1 à M ;

.- un sous-système de lecture rapide non destructive des M nœuds mémoire $MN_{k,m}$, m variant de 1 à M, de chaque pixel Pix#k, partagée entre les nœuds-mémoires $MN_{k,m}$, m variant de 1 à M, ou dédiée à chaque nœud mémoire $MN_{k,m}$, permettant de contrôler un critère de décision pour chaque pixel ;
.- un mécanisme de décision, basé sur le calcul d'un critère, permettant de contrôler un dispositif d'inhibition de l'exposition situé au niveau du pixel, lequel critère est défini en fonction des résultats obtenus par les lectures rapides non destructives des différents nœuds mémoires $MN_{k,m}$, m variant de 1 à M;
.- une chaîne de lecture image classique à pleine résolution avec conversion analogique / numérique.

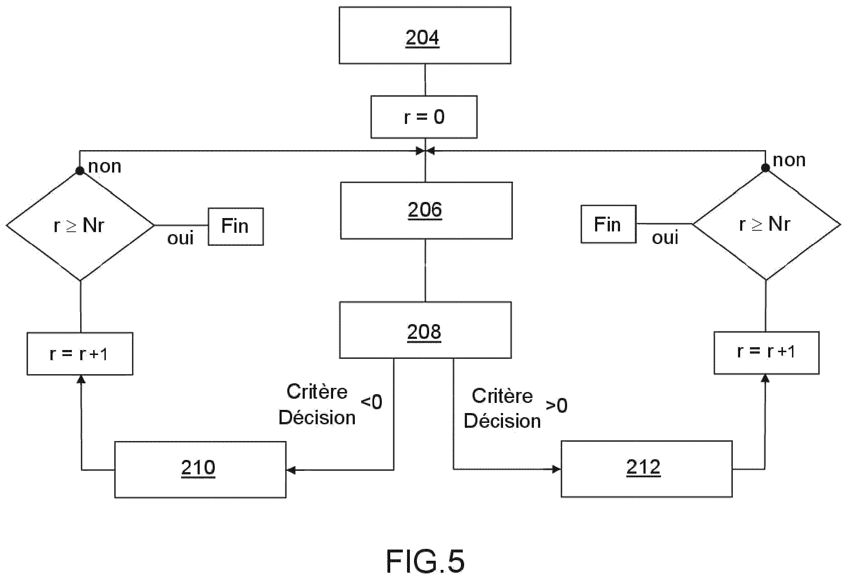

Suivant la Figure 5, un procédé de fonctionnement 202 du capteur d'image(s) CMOS selon l'invention comprend un ensemble d'étapes 204, 206, 206, 208, 210, 212 et 214.

Dans une première étape 204, tous les pixels du capteur d'image(s) sont réinitialisés, les charges stockées dans les nœuds mémoires $MN_{k,m}$, k variant de 1 à Nk et m variant de 1 à M, et la zone photo-sensible PhDk de chacun des pixels Pix#k, k variant de 1 à Nk, étant évacuées.

Puis dans une deuxième étape 206, une phase d'exposition est exécutée sur les pixels pendant laquelle le mécanisme d'inhibition est inactif.

La deuxième étape 206 est suivie d'une troisième étape 208 au cours de laquelle une phase de lectures rapides non destructives des nœuds mémoires $MN_{k,m}$, m variant de 1 à M, est exécutée pour chacun des pixels Pix#k, k variant de 1 à Nk, afin de déterminer dans la même troisième étape 208 le résultat du critère de décision.

Dans le cas où le critère de décision est négatif, selon une quatrième étape 210 le mécanisme d'inhibition de l'exposition est maintenu désactivé, ce qui autorise l'accumulation du signal, c'est-à-dire des charges, dans les nœuds mémoires du pixel concerné lors de la prochaine exposition.

Dans le cas où le critère de décision est positif, selon une cinquième étape 212 le mécanisme d'inhibition de l'exposition est activé ou reste activé, et maintenu activé lors de la prochaine phase d'exposition figeant ainsi le niveau de signal (i.e. la quantité de charges) accumulé dans les nœuds mémoires du pixel concerné lors de la prochaine phase d'exposition.

Les deuxième, troisième, quatrième, cinquième étapes 206, 208, 210, 212 sont répétées un nombre prédéterminé Nr-1 de fois selon la configuration de la séquence définie sur le capteur d'image(s). Comme le pixel permet des lectures non destructives, la succession des différentes phases d'exposition permettent d'accumuler du signal dans les nœuds mémoires jusqu'à déclencher, ou non, le critère.

A la fin de la séquence d'acquisition image, en fonction de la scène observée et de la configuration de la séquence, des pixels plus ou moins nombreux auront déclenché le critère.

A la fin de la séquence, dans une sixième étape 214 suivante, une phase de conversion analogique / numérique sur la pleine résolution du capteur, et exécutée, puis la transmission de données converties vers un système de traitement pour déterminer les distances des objets et leurs formes tridimensionnelles.

Si le temps d'exposition est suffisamment long et est réparti en un ensemble de phases d'expositions suffisamment courtes pour ne pas accumuler trop de signal en une fois, l'ensemble des pixels du capteur pourront déclencher le critère, sans pour autant atteindre la saturation du pixel. Dans ces conditions, le signal obtenu à la fin de la séquence sera optimal, car son rapport signal à bruit sera maximisé.

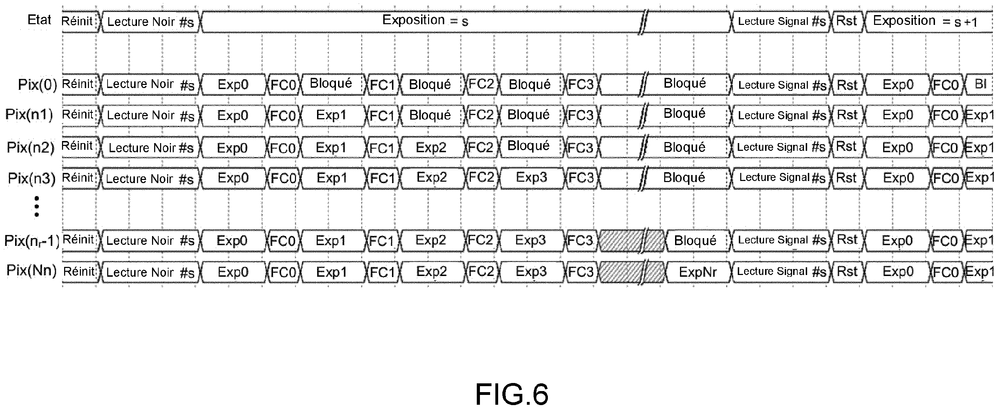

Suivant la Figure 6 et un diagramme illustrant un exemple de séquencement au niveau pixel du capteur, un comportement des différents pixels du capteur est représenté lors du parcours de la séquence qui dépend de la scène observée.

Plusieurs pixels, désignés par Pix(n), sont représentés dans ce diagramme, n désignant un indice photonique de niveau reçu par le pixel. L'indice 0 représente la plus forte intensité photonique et l'indice Nn représente la plus faible intensité photonique. Ces différents pixels déclenchent le critère à différents instants, nécessitant pour cela différents nombres de phases élémentaires d'expositions.

Plusieurs phases du séquencement du capteur d'image(s) CMOS sont représentées : la phase de réinitialisation (Reset ou Rst), la phase d'exposition (Exposure), et la phase de conversion et lecture (Readout). Pour chaque pixel, des phases de réinitialisation (Reset ou Rst), d'exposition (Exp), de conversions rapides (FC), d'inhibition de l'exposition (Blocked), et de conversion complète avec lecture (Readout Black & Signal) pour la réalisation d'un CDS (en anglais Correlated Double Sampling) externe.

Le mécanisme d'inhibition de l'exposition du pixel prend la forme d'un point mémoire d'inhibition IM (en anglais « Inhbitor Memory ») filtrant ou non les signaux de commandes des transistors de transferts des charges accumulées dans la zone photosensible vers les nœuds mémoires, i.e. les signaux $TRA_{k,m}$. Ce filtrage ou cette inhibition de transfert est mis en œuvre via des transistors de filtrage ou d'inhibition de transfert TI (en anglais « Transfer Inhibitor ») positionnés sur les lignes des signaux de commandes des transistors de transfert.

Le point mémoire $IM_k$ de l'état d'inhibition est accédé via le transistor de sélection commandé par le signal de sélection de ligne $SEL_k$. Lorsqu'il est sélectionné, le point mémoire $IM_k$ de l'état d'inhibition peut être chargé ou déchargé, afin de désactiver ou d'activer le mécanisme d'inhibition de l'exposition sur le pixel concerné en pilotant ses transistors d'inhibition $TI_k$.

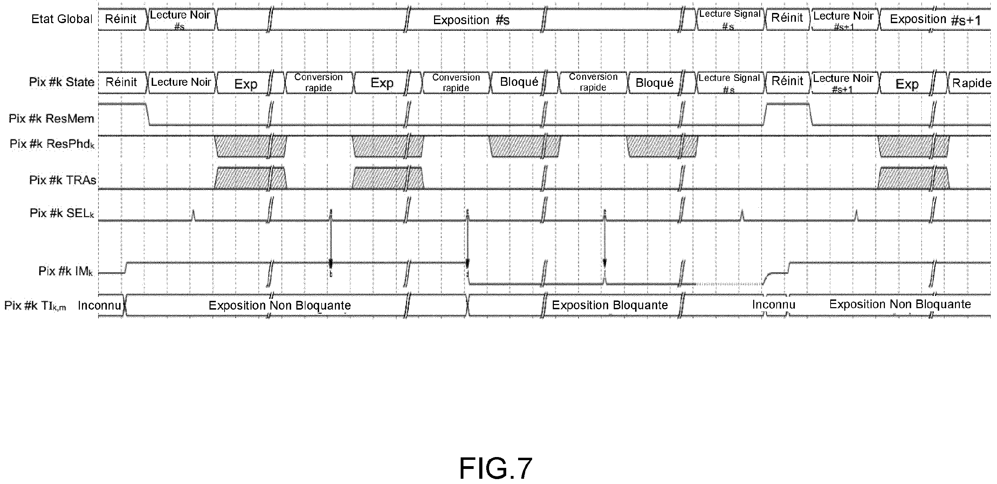

Suivant la Figure 7 et à titre d'exemple est illustré la séquence d'une image complète vue d'un seul pixel.

A l'étape de réinitialisation, le mécanisme est désactivé pour tous les pixels. Une conversion et une lecture des niveaux de réinitialisation est ici effectuée pour la réalisation d'un CDS externe.

Une phase d'exposition est exécutée sur les pixels, suivie d'une lecture rapide non destructive donnant pour chaque nœud mémoire d'un pixel (FC Pix#k, Mn#x), un résultat utilisé pour le calcul du critère (Crit Pix Col#k). Lors de cette conversion rapide, le signal $SEL_k$ (Pix#k $SEL_k$) est activé pour accéder au pixel.

Lorsque le critère est valide, celui-ci met à jour l'état du point mémoire « IM » (Pix#k IM) en le chargeant ou en le déchargeant. Le déchargement du point mémoire d'inhibition « IM » entraine le blocage de l'intégration sur le pixel.

L'enchainement des phases d'exposition et de lectures rapides permettent de déclencher le critère sur les différents pixels.

A la fin de la séquence, une conversion an analogique / numérique sur la pleine résolution est réalisée pour chacun des nœuds mémoires des pixels pour transmettre ces données de l'image capteur au système au système extérieur de traitement des images.

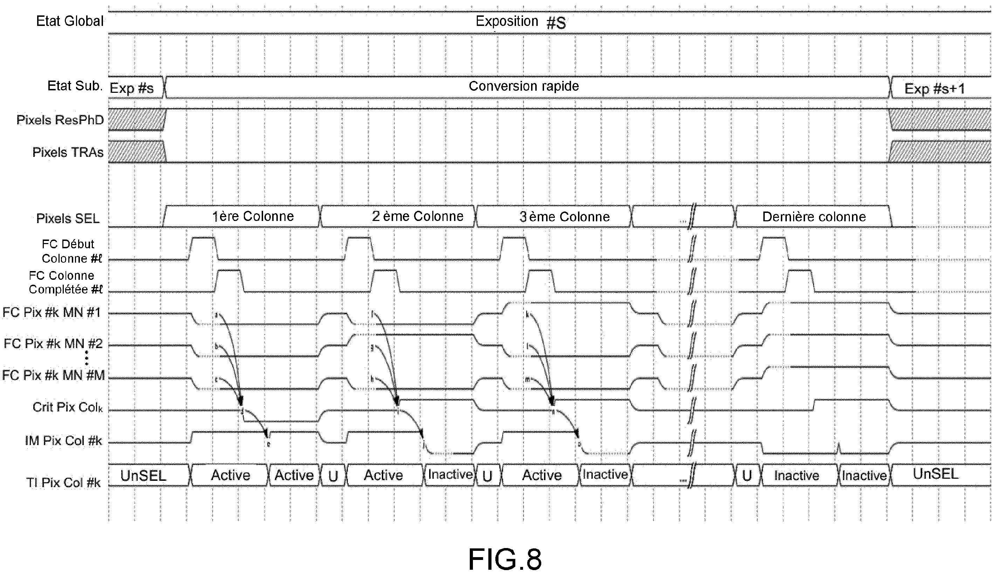

Suivant la Figure 8 et un diagramme de séquencement des phases de lectures rapides et des phases de contrôle de l'inhibition, le principe de fonctionnement du critère de décision en lien avec les lectures rapides est décrit, ainsi que son action sur le mécanisme d'inhibition de l'exposition intégré à chaque pixel. Ce diagramme présente la séquence de conversion rapide et les actions sur le mécanisme d'inhibition, associés aux pixels d'une même colonne.

« FC Start Row #l » indique l'instant où la lecture rapide est lancée, tandis que « FC Done Row #l » indique quand le résultat de la conversion rapide pour chaque nœud mémoire sera terminée.

« FC Pix #k MN # » indique l'état de la conversion rapide pour les nœuds mémoires 0 à M du pixel Pix#k en cours de traitement.

« Crit Pix Col#k « indique le résultat du critère d'inhibition pour le pixel en cours de traitement. « IM Pix Col #k » illustre le niveau de tension appliqué sur le point mémoire d'inhibition $IM_k$ du pixel en cours de traitement.

« TI Pix Col #k » illustre l'état logique du transistor d'inhibition du pixel en cours de traitement.

La conversion rapide utilise un principe de lecture rapide en série des différentes lignes. Pour chaque ligne I, I variant de 1 à NI, le signal SEL de la ligne à convertir sera positionné, puis les étapes de lecture rapide, de calcul du critère d'inhibition et l'application de celui-ci seront réalisées. A la sélection d'une nouvelle ligne sur le capteur, les états des signaux provenant du pixel doivent être rafraichis, ils passent donc par un état transitoire inconnu.

Pour chaque ligne sélectionnée, la lecture rapide est lancée, puis une fois terminée, la nouvelle valeur du critère est évaluée, et l'état du point mémoire d'inhibition IM est rafraichi. Ceci met à jour l'état du transistor d'inhibition TI du pixel courant pour la prochaine phase d'exposition.

Le principal avantage de cette architecture est de proposer une réduction importante du temps passé pour les différentes conversions des données nécessaires pour l'augmentation de la dynamique du capteur. Augmentant ainsi la vitesse d'acquisition.

Comme les conversions analogiques-numériques complètes sont remplacées en grande partie par des conversions rapides et partielles, sans transmission de données, le volume de données envoyées par le capteur se trouve largement réduit.

Les données retournées lors de la lecture du signal (conversion analogique - numérique finale et transmission) contiennent directement le résultat d'un traitement HDR (« High Dynamic Range), combinant les échantillons provenant de plusieurs configurations de temps d'exposition, **et** adapté pour le calcul de distance en temps de vol indirect IToF.

En imagerie classique, on cherche à mesurer les différences d'intensité entre différents pixels, avoir une réponse uniforme entre les différents pixels d'une image n'a aucune valeur.

En revanche en temps de vol indirect IToF, on cherche à uniformiser la réponse maximale des pixels sur plusieurs images avec différents déphasages (réponse maximale au plus près de la saturation sans l'atteindre). Comme l'information utile ne se situe pas sur le signal absolu, mais sur des différences de signal entre les différents échantillons déphasés, avoir des durées d'exposition différentes entre les pixels ne pose aucun problème. En revanche, le même temps d'intégration doit être appliqué aux différents nœuds mémoires d'un pixel pour garantir la cohérence des informations mesurées au sein d'un même pixel.

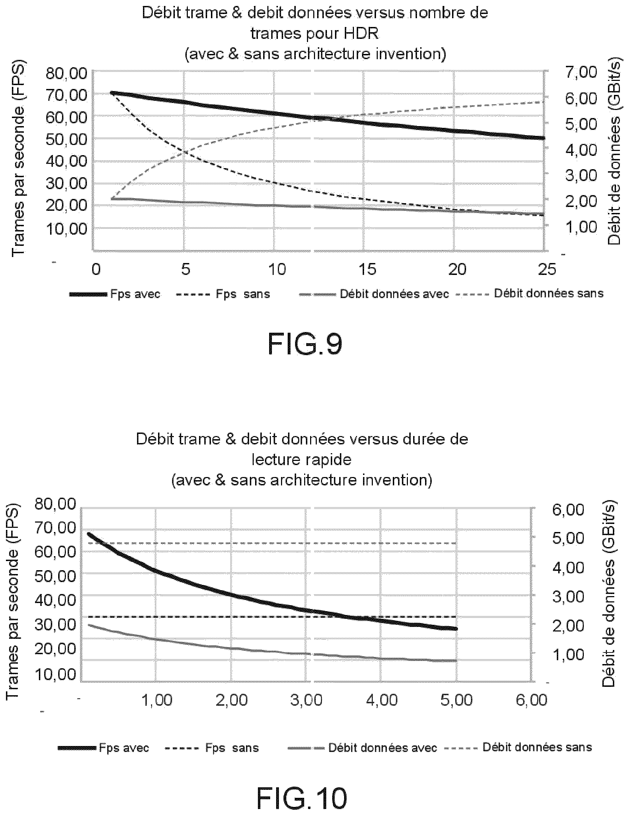

Suivant la Figure 9, l'évolution comparative de la vitesse d'acquisition et débit des données envoyées par un capteur d'image(s) en fonction du nombre d'images utilisées pour le traitement HDR (i.e. nombre de configurations de temps d'exposition) est illustrée entre un capteur d'image classique et un capteur d'image(s) selon l'invention.

Les deux capteurs d'images dont les performances sont comparées partagent un ensemble de caractéristiques suivantes :

.- nombre de lignes égal à 600 ;
.- nombre de colonnes égal à 800 ;
.- nombre de nœuds mémoires par pixel égal à 3;
.- pleine résolution de conversion analogique / numérique égal à 10 bits ;
.- utilisation d'un CDS (en anglais Correlated Double Sampling) externe ;
.- durée de l'impulsion d'allumage (en anglais « gating pulse ») égal à 20,00 ns ;
.- rapport cyclique de l'ouverture égal à 20% ;
.- nombre d'ouvertures égal à 10000.

Les résultats de certains paramètres de performance pour le capteur d'image classique dépourvu de l'architecture de l'invention (mais intégrant un mécanisme de lecture non destructives) sont les suivants :

.- durée totale du temps d'exposition égale à 10.00 ms ;
.- nombre d'intervalles d'exposition pour HDR égal à 10 (i.e. nombre de configurations de temps d'exposition pour la gestion de la dynamique de scène) ;
.- absence de phases de conversions rapides ;
.- nombre de lectures pleines égal à 11 :
.- durée de réinitialisation des nœuds mémoires égal à 1.00 µs;
.- durée de la pleine conversion par ligne égal à 3,50 µs;
.- durée totale des conversions de données égale à 23,10 ms ;

.- durée totale d'une unique acquisition égale à 33,10 ms ;

.- débit trame maximal égal à 30,21 trames par secondes fps (en anglais frame per second) ;
.- débit de données équivalent égal à 4,79 Gbit/s pour 30,21 trames par seconde.

Les résultats de certains paramètres de performance pour le capteur d'image ayant l'architecture de l'invention sont les suivants :

.- durée totale du temps d'exposition égale à 10.00 ms ;
.- nombre d'intervalles d'exposition pour HDR égal à 10 (i.e. nombre de configurations de temps d'exposition pour la gestion de la dynamique de scène) ;
.- nombre de phases de conversions rapides égal à 9 ;
.- nombre de lectures pleines égal à 2 (pour réalisation d'un CDS externe);
.- durée de réinitialisation des nœuds mémoires égal à 1.00 µs ;
.- durée de la conversion rapide par ligne égal à 0,40 µs (incluant l'évaluation du critère de décision, et le rafraichissement du mécanisme d'inhibition) ;
.- durée de la pleine conversion par ligne égal à 3,50 µs ;
.- durée totale de la conversion rapide égale à 2,16 ms ;
.- durée totale de la conversion égale à 4,20 ms ;
.- durée totale d'une unique acquisition égale à 16,36 ms ;
.- débit trame maximal égal à 61,12 trames par secondes fps (en anglais frame per second) ;
.- débit de données maximal égal à 1,76 Gbits/s
.- débit de données équivalent égal à 0,87 Gbit/s pour 30,21 trames par seconde ;
.- gain en débit de données égal à 82% entre la solution avec et sans l'invention (pour vitesse de acquisition de 30,21 trames par seconde pour les deux cas).

Suivant la Figure 10, l'évolution comparative de la vitesse d'acquisition et débit des données envoyées par un capteur d'image(s) en fonction de la durée de la phase de conversion rapide (évaluation du critère et rafraichissement du mécanisme d'inhibition) pour 10 images utilisées est illustrée entre un capteur d'image classique et un capteur d'image(s) selon l'invention, lesdits deux capteurs étant identiques à ceux utilisés pour l'établissement des performances illustrées sur la Figure 9.

Ainsi les Figures 9 et 10 montrent clairement que l'augmentation du nombre d'images capturées pour la réalisation d'un traitement HDR est largement moins impactant sur le capteur d'image(s) selon l'invention. De même si la conversion rapide est plus rapide qu'une conversion classique, le gain en vitesse d'acquisition et en débit de données est significatif. De même si la conversion rapide n'était pas beaucoup plus rapide que la conversion standard, le bénéfice de la solution reste entier car les données échangées avec l'extérieur intègrent déjà le traitement HDR, simplifiant alors grandement la gestion les traitements à réaliser au niveau système.

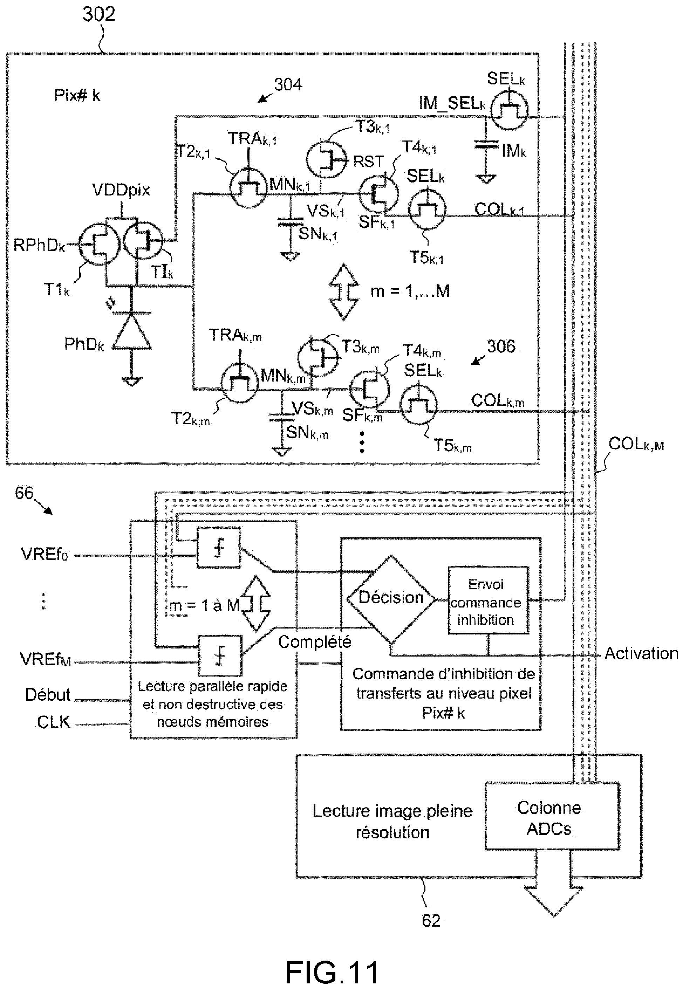

Suivant la Figure 11 et un deuxième mode de réalisation d'un pixel 302 et de son environnement, intégré dans le capteur d'image(s) de la Figure 3, et plus généralement d'un capteur d'image(s) CMOS selon l'invention, chaque pixel 302 diffère d'un pixel 102 de la Figure 4 par son mécanisme d'inhibition qui pilote la réinitialisation de la zone photo-sensible des pixels au lieu des transistors de transfert.

Le principe de fonctionnement dans cette variante est légèrement différent. L'inhibition de l'exposition du pixel est réalisée par le biais de la réinitialisation de la zone photosensible, et non pas par les transistors de transfert. La logique appliquée est ici inversée :

.- en appliquant une tension sur le point mémoire d'inhibition $IM_k$, la zone photosensible se retrouve rejetée par l'activation du transistor d'inhibition $TI_k$, empêchant ainsi la collection de charge lors des phases de transfert puisque celles-ci seront collectées par VDDpix ;

.- en l'absence de tension sur le point mémoire d'inhibition $IM_k$, le transistor d'inhibition $TI_k$ est bloqué, aucune action est réalisée sur la zone photosensible. La collection de charge des phases de transfert est alors maintenue.

Au démarrage de la séquence d'acquisition, pour chaque pixel Pix#k, k variant de 1 à Nk, la zone photosensible $PhD_k$, les nœuds de mémoire $MN_{k,m}$ , m variant de 1 à M, et le point mémoire d'inhibition sont réinitialisés. Le mécanisme de blocage est alors désactivé pour tous les pixels Pix#k, k variant de 1 à Nk.

Après chaque phase d'exposition, la phase de conversion rapide est exécutée, permettant d'évaluer le critère d'inhibition pour chaque pixel Pix#k, k variant de 1 à Nk. Si le critère d'inhibition est négatif, alors le point mémoire d'inhibition IMk du pixel concerné est maintenu déchargé (désactivant l'inhibition de la collection de charges, le transistor TIk est bloqué). Si le critère d'inhibition est positif, alors le point mémoire d'inhibition IMk du pixel concerné est chargé (activant l'inhibition de la collection de charges, le transistor TIk est activé.

Quel que soit l'état du dispositif d'inhibition, la réinitialisation de la zone photosensible $PhD_k$ sera toujours possible.

**Revendications**

**1.** Capteur d'image à pixels actifs CMOS et à nœuds mémoires multiples pour mesure de distance en temps de vol indirect IToF (en anglais « Indirect Time of Flight ») d'une scène observée d'objets réfléchissants comprenant

.- un ensemble d'un nombre entier Nk, supérieur ou égal à 1, de pixel(s) actif(s) CMOS (102 ; 302) Pix#k, k variant de 1 à Nk, ayant chacun une zone photosensible PhDk et un nombre entier M, supérieur ou égal à 2, de nœuds mémoires $MN_{k,m}$ , m variant de 1 à M ;
.- un sous-système de lecture image (62) des M nœuds mémoires $MN_{k,m}$ de chaque pixel Pix#k, k variant de 1 à Nk, pour établir par conversion analogique numérique, Nk fois M valeurs numériques, représentatives de quantités de charges générées par les zones photosensibles PhDk, k variant de 1 à Nk, et intégrées par les M nœuds mémoires $MN_{k,m}$ pendant une durée image d'exposition du pixel, inférieure ou égale à une durée image d'exposition maximale prédéterminée Tmax_exp, et fournir en sortie les M fois Nk valeurs numériques lues;
.- un sous-système de prétraitement image (64) configuré pour appliquer des traitements numériques auxdites valeurs numériques fournies en sortie par le sous-système de lecture image et envoyer des données d'images prétraitées de niveau pixel à un système applicatif de détermination de temps de vol indirect IToF d'une scène observée;
le capteur image étant **caractérisé en ce qu'**il comprend :

.- un sous-système (66) de lecture rapide des Nk fois M nœuds mémoires $MN_{k,m}$ et de contrôle d'un mécanisme d'inhibition de l'exposition des Nk pixels Pix#k, configuré pour, sur chacun des Nk pixels Pix#k, k variant de 1 à Nk, : réaliser pendant un cycle actuel Cycle_acq#k,s d'acquisition d'une image des Nk pixels du capteur, un nombre entier Nr prédéterminé de lectures rapides non destructives FCr, r variant de 0 à Nr-1, des tensions présentes sur les M nœuds mémoires $MN_{k,m}$ , m variant de 1 à M, et après chaque lecture rapide FCr, déterminer un signal d'inhibition de l'exposition du pixel Pix#k, à partir d'un critère de décision de poursuivre ou non l'exposition du pixel Pix#k, le critère de décision étant fonction des valeurs de tensions lues de manière non destructives sur les M nœuds mémoires $MN_{k,m}$ après ladite lecture rapide FCr ; et
.- dans chaque pixel Pix#k, au moins un transistor d'inhibition ($TI_{k,1}...TI_{k,m}$, $TI_k$) de l'exposition du pixel et un point mémoire

(IM$_k$) pouvant être chargé ou déchargé par ledit signal d'inhibition du pixel Pix#k afin d'activer ou désactiver le mécanisme d'inhibition du pixel en pilotant son ou ses transistors d'inhibition.

2. Capteur d'image à pixels actifs CMOS et à nœuds multiples pour mesure de distance en temps de vol indirect IToF selon la revendication 1, dans lequel

chaque pixel (102 ; 302) Pix#k, k variant de 1 à Nk, est configuré pour faire intégrer par ses M nœuds mémoires MN$_{k,m}$, m variant de 1 à M, les charges électriques générées par la zone photosensible PhDk pendant r intervalles élémentaires d'intégration INTr, r variant de 0 à Nr-1, chaque intervalle élémentaire d'intégration INTr étant suivi d'une lecture rapide FCr des M nœud mémoires MN$_{k,m}$ et d'une réévaluation du critère de décision d'inhibition, et

les r intervalles d'intégration INTr, distribués dans le cycle actuel Cycle_acq#s d'acquisition d'une image de pixel, ont respectivement des durées élémentaires Tr telles que la somme des durées élémentaires d'intégration Tr, r variant de 0 à Nr-1, est égale à la durée image d'exposition maximale prédéterminée Tmax_exp.

3. Capteur d'image à pixels actifs CMOS et à nœuds multiples pour mesure de distance en temps de vol indirect IToF selon la revendication 2, dans lequel

les durées élémentaires Tr, r variant de 0 à Nr, sont égales à une même valeur ; ou au moins deux durées élémentaires prises parmi l'ensemble des valeurs Tr, r variant de 0 à Nr-1 sont différentes et la distribution des valeurs Tr, r variant de 0 à Nr-1 est choisie de sorte à rendre maximale la dynamique du capteur.

4. Capteur d'image à pixels actifs CMOS et à nœuds multiples pour mesure de distance en temps de vol indirect IToF selon l'une des revendication 1 à 3, comportant un séquenceur (72) d'activation de phases d'un ensemble de phases mises en œuvre au cours du cycle actuel Cycle_acq#s au travers l'envoi de commandes aux Nk pixels, k variant de 1 à Nk, au sous-système de lecture rapide des Nk fois M nœuds mémoires MN$_{k,m}$ et de contrôle du mécanisme de l'inhibition de l'exposition des Nk pixels Pix#k, au sous-système de prétraitement image, ledit ensemble de phases comprenant :

.- pour chaque pixel (102 ; 302) Pix#k, k variant de 1 à Nk, des phases de réinitialisation (Reset ou Rst) de la zone photosensible PhDk et des M nœuds mémoires MN$_{k,m}$, m variant de 1 à M, des phases de lecture rapide non destructive des M nœuds mémoires (FCr), une phase d'exposition initiale (exp0) du pixel Pix#k suivie d'un premier nombre Nr1 (k,s) de phase(s) de maintien de l'exposition (Exp) du pixel Pix#k puis d'un nombre Nr2(k,s) de phase(s) d'inhibition (Blocked) de l'exposition du pixel Pix#k, la somme des nombres Nr1 (k,s) et Nr2(k, s) étant égale à Nr-1, et d'une phase de lecture image (Read) du pixel Px#k ; et

.- les phases de réinitialisation (Reset ou Rst) des zones photosensibles PhDk et des M nœuds mémoires MN$_{k,m}$, k variant de 1 à Nk et m variant de 1 à M sont exécutées en même temps à chaque acquisition d"image s suivant un mode d'obturation global (« Global Shutter ») des Nk pixels du capteur d'image.

5. Capteur d'images à pixels actifs CMOS et à nœuds multiples pour mesure de distance en temps de vol indirect IToF selon la revendication 4, dans lequel pour chaque pixel (102 ; 302) Pix#k, k variant de 1 à Nk, une lecture image est effectuée après une phase de réinitialisation de la zone photosensible PhDk et des M nœuds mémoires MN$_{k,m}$, m variant de 1 à M, ladite lecture image étant utilisée pour la réalisation d'un CDS externe.

6. Capteur d'image à pixels actifs CMOS et à nœuds multiples pour mesure de distance en temps de vol indirect IToF selon l'une des revendications 1 à 4, dans lequel chaque pixel (102 ; 302) Pix#k, k variant de 1 à Nk, configuré suivant une même architecture, comporte :

.- la zone photosensible PhDk,
.- un transistor T1k de réinitialisation de la zone photosensible PhDk en début de chaque cycle d'acquisition d'une image et au début ou à la fin de chaque cycle de micro-intégration, le premier transistor T1k étant commandé par un signal de réinitialisation global RPhk commun aux Nk pixels de l'ensemble des pixels ;
.- M nœuds mémoires MN$_{k,m}$, m variant de 1 à M, de stockage partagé sur M voies de stockage VS$_{k,m}$ les charges générées par la zone photosensible PhDk, et intégrées en parallèle pendant la durée d'exposition du pixel Pix#k correspondante au cycle actuel Cycle_acq#k,s d'acquisition d'une image ;
.- un dispositif de blocage synchrone (104 ; 304) de l'exposition du pixel Pix#k commun aux différents M nœuds mémoires Mk,m, m variant de 1 à M ;
.- un dispositif d'activation (106 ; 306) de l'accès du pixel Pix#k au sous-système (66) de lecture rapide des Nk fois M nœuds mémoires et de contrôle du mécanisme de l'inhibition des Nk pixels et au sous-système de lecture image des M nœuds mémoires du pixel Pix#k via M conducteurs d'accès indépendants de lecture $COL_{k,m}$ , m variant de 1 à M, et une voie d'accès de commande d'inhibition $COL_{k,IM}$.

7. Capteur d'image à pixels actifs CMOS et à nœuds multiples pour mesure de distance en temps de vol indirect IToF selon la revendication 6, dans lequel pour chaque pixel (102 ; 302) Pix#k, k variant de 1 à NK, chaque voie de de stockage $VS_{k,m}$ , m variant de 1 à M, des charges générées par la zone photosensible PhDk comporte :

.- un transistor de transfert de charges $T2_{k,m}$, configuré pour vider dans le nœud mémoire $MN_{k,m}$ les charges générées pendant la durée image d'exposition du pixel Pix#k, et commandé par un signal de commande de transfert de charges $TRA_{k,m}$ ;

.- un transistor $T3_{k,m}$ de réinitialisation du nœud mémoire $MN_{k,m}$, configuré pour réinitialiser le potentiel du nœud mémoire $MN_{k,m}$ au début du cycle actuel Cycle_acq#k,s d'une image , et commandé par un signal de réinitialisation par un signal RST commun à l'ensemble des Nk pixels ;

.- un transistor $T4_{k,m}$ de lecture du nœud mémoire $MN_{k,m}$ monté en suiveur et configuré pour reporter de sa grille vers sa source le niveau de potentiel du nœud mémoire $MN_{k,m}$ ; et

.- un transistor de sélection $T5_{k,m}$ , relié à la source du transistor $T4_{k,m}$ de lecture du nœud mémoire $MN_{k,m}$ , configuré pour reporter vers le conducteur d'accès $COL_{k,m}$ en lecture par le sous-système de lecture image des M nœuds mémoires du pixel Pi#k le potentiel du nœud mémoire $MN_{k,m}$ de charges, et commandé par un signal de commande $SEL_k$ d'accès au pixel Pix#k.

8. Capteur d'image à pixels actifs CMOS et à nœuds multiples pour mesure de distance en temps de vol indirect IToF selon la revendication 7, dans lequel, pour chaque pixel (102) Pix#k, k variant de 1 à Nk, le dispositif de blocage synchrone (104) de l'exposition du pixel Pix#k, commun aux différents M nœuds mémoires $MN_{k,m}$ , m variant de 1 à M :

.- est configuré pour moduler les signaux de commande $TRA_{k,m}$ , m variant de 1 à M, de transfert des charges générées pendant la durée image d'exposition du pixel Pix#k, par un signal modulant commun d'inhibition du transfert des charges par les transistors de transfert de charges $T2_{k,m}$, activé lorsque le sous-système (66) de lecture rapide des Nk fois M nœuds mémoires et de contrôle du mécanisme de l'inhibition des Nk pixels a décidé suite aux valeurs lues lors des lectures rapides non destructives antérieures de ne pas poursuivre l'exposition du pixel, et maintenu jusqu'à la lecture pleine du pixel, et

.- comporte, pour chaque voie $VS_{k,m}$ , m variant de 1 à M, de stockage des charges générées par la zone photosensible PhDk, un dit transistor $TI_{k,m}$ d'inhibition du signal de commande de transfert de charges $TRA_{k,m}$ .

9. Capteur d'image à pixels actifs CMOS et à nœuds multiples pour mesure de distance en temps de vol indirect IToF selon la revendication 7, dans lequel, pour chaque pixel (302) Pix#k, k variant de 1 à Nk, le dispositif de blocage synchrone (304) de l'exposition du pixel Pix#k, commun aux différents M nœuds mémoires $MN_{k,m}$ , m variant de 1 à M :

.- est configuré pour moduler l'évacuation des charges des générées par la zone photosensible PhDk pendant la durée image d'exposition du pixel Pix#k vers un nœud commun de liaison des M transistors de transfert de charges $T2_{k,m}$, m variant de 1 à M, par un signal modulant commun d'inhibition de l'évacuation des charges vers ledit nœud commun de liaison, activé lorsque le sous-système (66) de lecture rapide des Nk fois M nœuds mémoires et de contrôle du mécanisme de l'inhibition des Nk pixels a décidé suite aux valeurs lues lors des lectures rapides non destructives antérieures de ne pas poursuivre l'exposition du pixel (302) Pix#k, et maintenu jusqu'à la lecture pleine du pixel, et

.- comporte, monté en parallèle du transistor T1k de réinitialisation de la zone photosensible PhDk , un dit transistor $TI_k$ d'inhibition de l'évacuation des charges générées par la zone photosensible PhDk vers ledit nœud commun.

10. Capteur d'image à pixels actifs CMOS et à nœuds multiples pour mesure de distance en temps de vol indirect IToF selon l'une des revendications 7 à 9 dans lequel le point mémoire ($IM_k$) du mécanisme d'inhibition est accédé via un transistor commandé par le signal de commande $SEL_k$.

11. Capteur d'image à pixels actifs CMOS et à nœuds multiples pour mesure de distance en temps de vol indirect IToF selon l'une des revendications 1 à 4,

.- dans lequel les Nk pixels, k variant de 1 à Nk, sont agencés sous une forme matricielle (54) suivant un nombre entier NI, supérieur ou égal à 2, de ligne(s), et un nombre entier Nc, supérieur ou égal à 2, de colonnes, Nk étant égal au produit de Nc et NI ; et

.- comprenant en outre un décodeur de lignes (68), configuré pour faire accéder ligne par ligne sur des fenêtres temporelles prédéterminées, en même temps les pixels d'une même ligne $l$ aux ressources du traitement du sous-système de lecture image pleine résolution (62) et du sous-système (66) de lecture rapide et non destructif des Nc fois M nœuds mémoires $MN_{k,m}$ et de contrôle du mécanisme de l'inhibition de l'exposition des Nc pixels de ladite même ligne $l$, et de mutualiser ainsi les ressources de traitement du sous-système de lecture image pleine résolution (62) et du sous-système (66) de lecture rapide et de contrôle du mécanisme de l'inhibition de l'exposition des pixels colonne par colonne.

12. Appareil de mesure de distance en temps de vol indirect IToF d'une scène d'objets bi ou tridimensionnelle comprenant :

   .- une source (8) émettrice d'une série d'impulsions de lumière ;
   .- un capteur d'image(s) à pixels actifs CMOS et à nœuds mémoires multiples (12 ; 52) selon l'une des revendications 1 à 10 pour convertir les impulsions lumineuses réfléchies par les objets de la scène (6) en des données de pixels caractérisant une ou plusieurs images ; et
   .- un bloc de traitement (14) des données des pixels de la ou des images pour déterminer un champ de profondeurs des objets de la scène (6) vue depuis un emplacement où se trouve la source émettrice (8) et le capteur d'image(s) (12 ; 53).

13. Procédé de mise en œuvre d'un capteur d'image(s) à pixels actifs CMOS et à nœuds mémoires multiples pour mesure de distance en temps de vol indirect IToF d'une scène observée,

   le capteur d'image (52) comprenant :

   .- un ensemble d'un nombre entier Nk, supérieur ou égal à 1, de pixel(s) actif(s) CMOS (102 ; 302) Pix#k, k variant de 1 à Nk, ayant chacun une zone photosensible PhDk et un nombre entier M, supérieur ou égal à 2, de nœuds mémoires $MN_{k,m}$, m variant de 1 à M ;
   .- un sous-système (66) de lecture rapide non destructive des Nk fois M nœuds mémoires $MN_{k,m}$ et de contrôle du mécanisme de l'inhibition de l'exposition des Nk pixels Pix#k, mis en œuvre pendant l'acquisition d'une image par les Nk pixels ;
   .- un sous-système de lecture image (62) des M nœuds mémoires $MN_{k,m}$ de chaque pixel Pix#k, k variant de 1 à Nk ;
   .- un sous-système de prétraitement image (64) ;

   le procédé de mise en œuvre du capteur image pendant l'acquisition d'une image comprenant des étapes au cours desquelles :

   .- le sous-système de lecture image (62) lit les M nœuds mémoires $MN_{k,m}$ de chaque pixel (102 ; 302) Pix#k, k variant de 1 à Nk, établit par conversion analogique numérique, Nk fois M valeurs numériques, représentatives de quantités de charges générées par les zones photosensibles PhDk, k variant de 1 à Nk, et intégrées par les M nœuds mémoires $MN_{k,m}$ pendant une durée image d'exposition du pixel, inférieure ou égale à une durée image d'exposition maximale prédéterminée Tmax_exp, et fournit en sortie les M fois Nk valeurs numériques lues ;
   .- le sous-système de prétraitement image (64) applique des traitements numériques auxdites valeurs numériques fournies en sortie par le sous-système de lecture image (62) et envoie des données d'images prétraitées de niveau pixel à un système applicatif de détermination de temps de vol indirect IToF d'une scène observée ; et

   le procédé de mise en œuvre du capteur image étant **caractérisé en ce que** :

   .- le sous-système (66) de lecture rapide non destructive des Nk fois M nœuds mémoires $MN_{k,m}$ et de contrôle du mécanisme de l'inhibition de l'exposition des Nk pixels Pix#k, sur chacun des Nk pixels Pix#k, k variant de 1 à Nk, réalise pendant un cycle actuel Cycle_acq#k,s d'acquisition d'une image s, un nombre entier Nr prédéterminé de lectures rapides non destructives FCr, r variant de 0 à Nr-1, des tensions présentes sur les M nœuds mémoires $MN_{k,m}$, m variant de 1 à M, et après chaque lecture rapide FCr, détermine un signal d'inhibition de l'exposition du pixel Pix#k, à partir d'un critère de décision de poursuivre ou non l'exposition du pixel Pix#k, le critère de décision étant fonction des valeurs de tensions lues de manière non destructives sur les M nœuds mémoires $MN_{k,m}$ après ladite lecture rapide FCr et d'un ou plusieurs seuils de décision; et
   .- le signal d'inhibition de chaque pixel Pix#k charge ou décharge un point mémoire ($IM_k$) d'inhibition du pixel Pix#k afin d'activer ou désactiver le mécanisme d'inhibition du pixel en pilotant au moins un transistor d'inhibition ($TI_{k,1}...TI_{k,m}$, $TI_k$) de l'exposition du pixel.

## Patentansprüche

1. Bildsensor mit aktiven CMOS-Pixeln und mehrfachen Speicherknoten zur Entfernungsmessung der indirekten Flugzeit IToF ("Indirect Time of Flight") einer beobachteten Szene reflektierender Objekte, umfassend:

   .- eine Gesamtheit einer ganzzahligen Anzahl Nk, größer oder gleich 1, aktiver CMOS-Pixel (102; 302) Pix#k, wobei k von 1 bis Nk variiert, die jeweils eine lichtempfindliche Zone PhDk und eine ganzzahlige Anzahl M, größer oder gleich 2, von Speicherknoten $MN_{k,m}$, aufweisen, wobei m von 1 bis M variiert;

   .- ein Teilsystem (62) zur Bildauslesung der M Speicherknoten $MN_{k,m}$ jedes Pixels Pix#k, wobei k von 1 bis Nk variiert, um durch Analog-Digital-Wandlung Nk mal M digitale Werte zu ermitteln, die für von den lichtempfindlichen Zonen PhDk, wobei k von 1 bis Nk variiert, erzeugte und von den M Speicherknoten $MN_{k,m}$ während einer Pixelbelichtungsdauer integrierte Ladungsmengen repräsentativ sind, die kleiner oder gleich einer vorbestimmten maximalen Pixelbelichtungsdauer Tmax_exp ist, und die M mal Nk gelesenen digitalen Werte am Ausgang bereitzustellen;

   .- ein Teilsystem (64) zur Bildvorverarbeitung, das konfiguriert ist, um digitale Verarbeitungen auf die vom Teilsystem zur Bildauslesung am Ausgang bereitgestellten digitalen Werte anzuwenden und vorverarbeitete Bilddaten auf Pixelebene an ein Anwendungssystem zur Bestimmung der indirekten Flugzeit IToF einer beobachteten Szene zu senden;

   wobei der Bildsensor **dadurch gekennzeichnet ist, dass** er umfasst:

   .- ein Teilsystem (66) zur schnellen Auslesung der Nk mal M Speicherknoten $MN_{k,m}$ und zur Steuerung eines Mechanismus zur Inhibierung der Belichtung der Nk Pixel Pix#k, das konfiguriert ist, um bei jedem der Nk Pixel Pix#k, wobei k von 1 bis Nk variiert, während eines aktuellen Erfassungszyklus Cycle_acq#k,s eines Bildes der Nk Pixel des Sensors eine ganzzahlige vorbestimmte Anzahl Nr von schnellen, nicht destruktiven Auslesungen FCr, wobei r von 0 bis Nr-1 variiert, der an den M Speicherknoten $MN_{k,m}$, wobei m von 1 bis M variiert, anliegenden Spannungen durchzuführen und nach jeder schnellen Auslesung FCr ein Signal zur Inhibierung der Belichtung des Pixels Pix#k auf der Grundlage eines Entscheidungskriteriums für die Fortsetzung oder den Abbruch der Belichtung des Pixels Pix#k zu bestimmen, wobei das Entscheidungskriterium eine Funktion der nach der schnellen Auslesung FCr zerstörungsfrei von den M Speicherknoten $MN_{k,m}$ gelesenen Spannungswerte ist; und

   .- in jedem Pixel Pix#k mindestens einen Transistor zur Inhibierung ($TI_{k,1}...TI_{k,m}$, $TI_k$) der Belichtung des Pixels und einen Speicherpunkt ($IM_k$) der durch das Signal zur Inhibierung des Pixels Pix#k geladen oder entladen werden kann, um den Inhibierungsmechanismus des Pixels durch die Ansteuerung seines oder seiner Inhibierungstransistoren zu aktivieren oder zu deaktivieren.

2. Bildsensor mit aktiven CMOS-Pixeln und mehrfachen Speicherknoten zur Entfernungsmessung der indirekten Flugzeit IToF nach Anspruch 1, wobei

   jedes Pixel (102; 302) Pix#k, wobei k von 1 bis Nk variiert, konfiguriert ist, um durch seine M Speicherknoten $MN_{k,m}$, wobei m von 1 bis M variiert, die von der lichtempfindlichen Zone PhDk während r elementaren Integrationsintervallen INTr, wobei r von 0 bis Nr-1 variiert, erzeugten elektrischen Ladungen integrieren zu lassen, wobei jedem elementaren Integrationsintervall INTr eine schnelle Auslesung FCr der M Speicherknoten $MN_{k,m}$ und eine Neubewertung des Entscheidungskriteriums zur Inhibierung folgt, und

   die r Integrationsintervalle INTr, die im aktuellen Erfassungszyklus Cycle_acq#s eines Pixelbildes verteilt sind, jeweils elementare Zeitdauern Tr aufweisen, so dass die Summe der elementaren Integrationszeitdauern Tr, wobei r von 0 bis Nr-1 variiert, gleich der vorbestimmten maximalen Pixelbelichtungsdauer Tmax_exp ist.

3. Bildsensor mit aktiven CMOS-Pixeln und mehrfachen Speicherknoten zur Entfernungsmessung der indirekten Flugzeit IToF nach Anspruch 2, wobei

   die elementaren Dauern Tr, wobei r von 0 bis Nr variiert, gleich einem gemeinsamen Wert sind; oder

   mindestens zwei elementare Dauern aus der Gesamtheit der Werte Tr, wobei r von 0 bis Nr-1 variiert, unterschiedlich sind und die Verteilung der Werte Tr, wobei r von 0 bis Nr-1 variiert, so gewählt ist, dass die Dynamik des Sensors maximiert wird.

4. Bildsensor mit aktiven CMOS-Pixeln und mehrfachen Speicherknoten zur Entfernungsmessung der indirekten Flugzeit IToF nach einem der Ansprüche 1 bis 3, umfassend einen Sequenzer (72) zur Aktivierung von Phasen einer Gesamtheit von Phasen, die während des aktuellen Zyklus Cycle_acq#s durchgesetzt werden, durch das Senden von Steuersignalen an die Nk Pixel, wobei k von 1 bis Nk variiert, an das Teilsystem zur schnellen Auslesung der Nk mal M Speicherknoten $MN_{k,m}$ und zur Steuerung des Mechanismus der Inhibierung der Belichtung der Nk Pixel Pix#k, an das Teilsystem zur Bildvorverarbeitung, wobei die Gesamtheit der Phasen umfasst:

.- für jedes Pixel (102; 302) Pix#k, wobei k von 1 bis Nk variiert, Phasen zur Rücksetzung (Reset oder Rst) der lichtempfindlichen Zone PhDk und der M Speicherknoten $MN_{k,m}$, wobei m von 1 bis M variiert, Phasen zur schnellen, nicht destruktiven Auslesung der M Speicherknoten (FCr), eine Phase der anfänglichen Belichtung (exp0) des Pixels Pix#k gefolgt von einer ersten Anzahl Nr1 (k,s) von Phase(n) der Aufrechterhaltung der Belichtung (Exp) des Pixels Pix#k, dann von einer Anzahl Nr2(k,s) von Phase(n) der Inhibierung (Blocked) der Belichtung des Pixels Pix#k, wobei die Summe der Anzahlen Nr1 (k,s) und Nr2(k, s) gleich Nr-1 ist, und einer Phase der Bildauslesung (Read) des Pixels Px#k; und

.- die Phasen zur Rücksetzung (Reset oder Rst) der lichtempfindlichen Zonen PhDk und der M Speicherknoten $MN_{k,m}$, wobei k von 1 bis Nk und m von 1 bis M variiert, gleichzeitig bei jeder Bildaufnahme s nach einem globalen Verschlussverfahren («Global Shutter») der Nk Pixel des Bildsensors ausgeführt werden.

5. Bildsensor mit aktiven CMOS-Pixeln und mehrfachen Speicherknoten zur Entfernungsmessung der indirekten Flugzeit IToF nach Anspruch 4, wobei für jedes Pixel (102; 302) Pix#k, wobei k von 1 bis Nk variiert, eine Bildauslesung nach einer Phase der Rücksetzung der lichtempfindlichen Zone PhDk und der M Speicherknoten $MN_{k,m}$, wobei m von 1 bis M variiert, durchgeführt wird, wobei die Bildauslesung zur Realisierung eines externen CDS verwendet wird.

6. Bildsensor mit aktiven CMOS-Pixeln und mehrfachen Speicherknoten zur Entfernungsmessung der indirekten Flugzeit IToF nach einem der Ansprüche 1 bis 4, wobei jedes Pixel (102; 302) Pix#k, wobei k von 1 bis Nk variiert, nach einer gleichen Architektur konfiguriert, umfasst:

.- die lichtempfindliche Zone PhDk,
.- einen Transistor T1 k zur Rücksetzung der lichtempfindlichen Zone PhDk zu Beginn jedes Zyklus der Aufnahme eines Bildes und zu Beginn oder am Ende jedes Mikrointegrationszyklus, wobei der erste Transistor T1k durch ein globales Rücksetzsignal RPhk gesteuert wird, das allen Nk Pixeln der Gesamtheit der Pixel gemeinsam ist;
.- M Speicherknoten $MN_{k,m}$,

wobei m von 1 bis M variiert, zur geteilten Speicherung auf M Speicherwegen $VS_{k,m}$ der von der lichtempfindlichen Zone PhDk erzeugten Ladungen, die parallel während der dem aktuellen Erfassungszyklus Cycle_acq#k,s eines Bildes entsprechenden Belichtungsdauer des Pixels Pix#k integriert werden;

.- eine Vorrichtung (104; 304) zur synchronen Blockierung der Belichtung des Pixels Pix#k, die den verschiedenen M Speicherknoten Mk,m, wobei m von 1 bis M variiert, gemeinsam ist;
.- eine Vorrichtung (106; 306) zur Aktivierung des Zugriffs des Pixels Pix#k auf das Teilsystem (66) zur schnellen Auslesung der Nk mal M Speicherknoten und zur Steuerung des Mechanismus der Inhibierung der Nk Pixel und auf das Teilsystem zur Bildauslesung der M Speicherknoten des Pixels Pix#k via M unabhängige Leiter $COL_{k,m}$, des Auslesezugriffs, wobei m von 1 bis M variiert, und einen Leiter $COL_{k,IM}$ des Steuerzugriffs zur Inhibierung.

7. Bildsensor mit aktiven CMOS-Pixeln und mehrfachen Speicherknoten zur Entfernungsmessung der indirekten Flugzeit IToF nach Anspruch 6, wobei für jedes Pixel (102; 302) Pix#k, wobei k von 1 bis NK variiert, jeder Speicherweg $VS_{k,m}$, wobei m von 1 bis M variiert, der von der lichtempfindlichen Zone PhDk erzeugten Ladungen umfasst:

.- einen Ladungstransfertransistor $T2_{k,m}$, der konfiguriert ist, um die während der Pixelbelichtungsdauer des Pixels Pix#k erzeugten Ladungen in den Speicherknoten $MN_{k,m}$ zu entleeren, und der durch ein Steuersignal zum Ladungstransfer $TRA_{k,m}$ gesteuert wird;
.- einen Transistor $T3_{k,m}$ zur Rücksetzung des Speicherknotens $MN_{k,m}$, der konfiguriert ist, um das Potential des Speicherknotens $MN_{k,m}$ zu Beginn des aktuellen Zyklus Cycle_acq#k,s eines Bildes zurückzusetzen, und der durch ein Rücksetzsignal durch ein gemeinsames Signal RST für die Gesamtheit der Nk Pixel gesteuert wird;
.- einen Transistor $T4_{k,m}$ zur Auslesung des Speicherknotens $MN_{k,m}$ der als Follower montiert und konfiguriert ist, um das Potentialniveau des Speicherknotens $MN_{k,m}$ zu übertragen; und

.- einen Auswahltransistor $T5_{k,m}$, verbunden mit der Source des Transistors $T4_{k,m}$ zur Auslesung des Speicherknotens $MN_{k,m}$, konfiguriert zum Weiterleiten an den Zugriffsleiter $COL_{k,m}$ mittels des Teilsystems zur Bildauslesung der M Speicherknoten des Pixels $Pi\#k$ des Potentials des Ladungsspeicherknotens $MN_{k,m}$ und gesteuert durch ein Steuersignal $SEL_k$ zum Zugriff auf das Pixel $Pix\#k$.

8. Bildsensor mit aktiven CMOS-Pixeln und mehrfachen Speicherknoten zur Entfernungsmessung der indirekten Flugzeit IToF nach Anspruch 7, wobei für jedes Pixel (102) $Pix\#k$, wobei k von 1 bis Nk variiert, die Vorrichtung zur synchronen Blockierung (104) der Belichtung des Pixels $Pix\#k$, die den verschiedenen M Speicherknoten $MN_{k,m}$, wobei m von 1 bis M variiert, gemeinsam ist:

   .- konfiguriert ist, um die Steuersignale $TRA_{k,m}$, wobei m von 1 bis M variiert, zur Übertragung der während der Pixelbelichtungsdauer des Pixels $Pix\#k$ erzeugten Ladungen durch ein gemeinsames modulierendes Signal zur Inhibierung der Ladungsübertragung durch die Ladungstransfertransistoren $T2_{k,m}$, zu modulieren, aktiviert, wenn das Teilsystem (66) zur schnellen Auslesung der Nk mal M Speicherknoten und zur Steuerung des Mechanismus der Inhibierung der Nk Pixel aufgrund der bei vorherigen schnellen, nicht destruktiven Auslesungen gelesenen Werte entschieden hat, die Belichtung des Pixels nicht fortzusetzen, und bis zur Vollauslesung des Pixels aufrechterhalten wird, und
   .- für jeden Speicherweg $VS_{k,m}$, wobei m von 1 bis M variiert, der von der lichtempfindlichen Zone PhDk erzeugten Ladungen einen besagten Transistor $TI_{k,m}$ zur Inhibierung des Steuersignals zum Ladungstransfer $TRA_{k,m}$ umfasst.

9. Bildsensor mit aktiven CMOS-Pixeln und mehrfachen Speicherknoten zur Entfernungsmessung der indirekten Flugzeit IToF nach Anspruch 7, wobei für jedes Pixel (302) $Pix\#k$, wobei k von 1 bis Nk variiert, die Vorrichtung zur synchronen Blockierung (304) der Belichtung des Pixels $Pix\#k$, die den verschiedenen M Speicherknoten $MN_{k,m}$, wobei m von 1 bis M variiert, gemeinsam ist:

   .- konfiguriert ist, um die Ableitung der von der lichtempfindlichen Zone PhDk während der Pixelbelichtungsdauer des Pixels $Pix\#k$ erzeugten Ladungen zu einem gemeinsamen Verbindungsknoten der M Ladungstransfertransistoren $T2_{k,m}$, wobei m von 1 bis M variiert, durch ein gemeinsames modulierendes Signal zur Inhibierung der Ladungsableitung zu besagtem gemeinsamen Verbindungsknoten zu modulieren, aktiviert, wenn das Teilsystem (66) zur schnellen Auslesung der Nk mal M Speicherknoten und zur Steuerung des Mechanismus der Inhibierung der Nk Pixel aufgrund der bei vorherigen schnellen, nicht destruktiven Auslesungen gelesenen Werte entschieden hat, die Belichtung des Pixels (302) $Pix\#k$ nicht fortzusetzen, und bis zur Vollauslesung des Pixels aufrechterhalten wird, und

   .- parallel zum Transistor T1k zur Rücksetzung der lichtempfindlichen Zone PhDk geschaltet, einen besagten Transistor $TI_k$ zur Inhibierung der Ableitung der von der lichtempfindlichen Zone PhDk erzeugten Ladungen zu besagtem gemeinsamen Knoten umfasst.

10. Bildsensor mit aktiven CMOS-Pixeln und mehrfachen Speicherknoten zur Entfernungsmessung der indirekten Flugzeit IToF nach einem der Ansprüche 7 bis 9, wobei auf den Speicherpunkt ($IM_k$) des Inhibierungsmechanismus über einen durch das Steuersignal $SEL_k$ zugegriffen wird.

11. Bildsensor mit aktiven CMOS-Pixeln und mehrfachen Speicherknoten zur Entfernungsmessung der indirekten Flugzeit IToF nach einem der Ansprüche 1 bis 4,

   .- wobei die Nk Pixel, wobei k von 1 bis Nk variiert, in einer matrixförmigen Anordnung (54) mit einer ganzzahligen Anzahl NI, größer oder gleich 2, von Zeilen und einer ganzzahligen Anzahl Ne, größer oder gleich 2, von Spalten angeordnet sind, wobei Nk gleich dem Produkt von Ne und NI ist; und
   .- weiter umfassend einen Zeilendecoder (68), der konfiguriert ist, um zeilenweise innerhalb vorbestimmter Zeitfenster gleichzeitig die Pixel einer gleichen Zeile I auf die Verarbeitungsressourcen des Teilsystems zur Bildauslesung in voller Auflösung (62) und des Teilsystems (66) zur schnellen und nicht destruktiven Auslesung der Ne mal M Speicherknoten $MN_{k,m}$ und zur Steuerung des Mechanismus der Inhibierung der Belichtung der Ne Pixel besagter gleicher Zeile l, zugreifen zu lassen und so die Verarbeitungsressourcen des Teilsystems zur Bildauslesung in voller Auflösung (62) und des Teilsystems (66) zur schnellen Auslesung und zur Steuerung des Mechanismus der Inhibierung der Belichtung der Pixel spaltenweise zusammenzufassen.

12. Einrichtung zur Entfernungsmessung der indirekten Flugzeit IToF einer zwei- oder dreidimensionalen Objektszene, umfassend:

.- eine Quelle (8) zum Aussenden einer Serie von Lichtimpulsen;

.- einen Bildsensor mit aktiven CMOS-Pixeln und mehrfachen Speicherknoten (12; 52) nach einem der Ansprüche 1 bis 10, um die von den Objekten der Szene (6) reflektierten Lichtimpulse in Pixeldaten umzuwandeln, die ein oder mehrere Bilder charakterisieren; und

.- einen Verarbeitungsblock (14) der Pixeldaten des einen oder der mehreren Bilder, um ein Tiefenfeld der Objekte der Szene (6) zu bestimmen, von einem Standort aus gesehen, an dem sich die aussendende Quelle (8) und der Bildsensor (12; 53) befinden.

13. Verfahren zur Implementierung eines Bildsensors mit aktiven CMOS-Pixeln und mehrfachen Speicherknoten zur Entfernungsmessung der indirekten Flugzeit IToF einer beobachteten Szene,

wobei der Bildsensor (52) umfasst:

.- eine Gesamtheit einer ganzzahligen Anzahl Nk, größer oder gleich 1, aktiver CMOS-Pixel (102; 302) Pix#k, wobei k von 1 bis Nk variiert, die jeweils eine lichtempfindliche Zone PhDk und eine ganzzahlige Anzahl M, größer oder gleich 2, von Speicherknoten $MN_{k,m}$, aufweisen, wobei m von 1 bis M variiert;

.- ein Teilsystem (66) zur schnellen, nicht destruktiven Auslesung der Nk mal M Speicherknoten $MN_{k,m}$ und zur Steuerung des Mechanismus der Inhibierung der Belichtung der Nk Pixel Pix#k, implementiert während der Aufnahme eines Bildes durch die Nk Pixel;

.- ein Teilsystem (62) zur Bildauslesung der M Speicherknoten $MN_{k,m}$ jedes Pixels Pix#k, wobei k von 1 bis Nk variiert;

ein Teilsystem (64) zur Bildvorverarbeitung; wobei das Implementierungsverfahren des Bildsensors während der Aufnahme eines Bildes Schritte umfasst, in denen:

.- das Teilsystem zur Bildauslesung (62) die M Speicherknoten $MN_{k,m}$ jedes Pixels (102; 302) Pix#k liest, wobei k von 1 bis Nk variiert, durch Analog-Digital-Wandlung Nk mal M digitale Werte ermittelt, die für von den lichtempfindlichen Zonen PhDk, wobei k von 1 bis Nk variiert, erzeugte und von den M Speicherknoten $MN_{k,m}$ während einer Pixelbelichtungsdauer integrierte Ladungsmengen repräsentativ sind, die kleiner oder gleich einer vorbestimmten maximalen Pixelbelichtungsdauer Tmax_exp ist, und die M mal Nk gelesenen digitalen Werte am Ausgang bereitstellt;

.- das Teilsystem zur Bildvorverarbeitung (64) digitale Verarbeitungen auf die vom Teilsystem zur Bildauslesung (62) am Ausgang bereitgestellten digitalen Werte anwendet und vorverarbeitete Bilddaten auf Pixelebene an ein Anwendungssystem zur Bestimmung der indirekten Flugzeit IToF einer beobachteten Szene sendet; und

wobei das Implementierungsverfahren des Bildsensors **dadurch gekennzeichnet ist, dass**:

.- das Teilsystem (66) zur schnellen, nicht destruktiven Auslesung der Nk mal M Speicherknoten $MN_{k,m}$ und zur Steuerung des Mechanismus der Inhibierung der Belichtung der Nk Pixel Pix#k bei jedem der Nk Pixel Pix#k, wobei k von 1 bis Nk variiert, während eines aktuellen Erfassungszyklus Cycle_acq#k,s einer Bildaufnahme s eine ganzzahlige vorbestimmte Anzahl Nr von schnellen, nicht destruktiven Auslesungen FCr durchführt, wobei r von 0 bis Nr-1 variiert, der an den M Speicherknoten $MN_{k,m}$, wobei m von 1 bis M variiert, anliegenden Spannungen und nach jeder schnellen Auslesung FCr ein Signal zur Inhibierung der Belichtung des Pixels Pix#k auf der Grundlage eines Entscheidungskriteriums für die Fortsetzung oder den Abbruch der Belichtung des Pixels Pix#k bestimmt, wobei das Entscheidungskriterium eine Funktion der nach der schnellen Auslesung FCr nicht destruktiv von den M Speicherknoten $MN_{k,m}$ gelesenen Spannungswerte und eines oder mehrerer Entscheidungsschwellen ist; und

.- das Signal zur Inhibierung jedes Pixels Pix#k einen Speicherpunkt (IMk) zur Inhibierung des Pixels Pix#k lädt oder entlädt, um den Inhibierungsmechanismus des Pixels durch die Ansteuerung mindestens eines Transistors zur Inhibierung ($TI_{k,1} ... TI_{k,m}$, $TI_k$) der Belichtung des Pixels zu aktivieren oder zu deaktivieren.

**Claims**

1. CMOS and multiple memory node active pixel image sensor to measuring distance in Indirect Time of Flight (IToF) of an observed scene, comprising

.- a set of an integer Nk, greater than or equal to 1, of CMOS active pixel(s) (102; 302) Pix#k, k varying from 1 to Nk, each having a photosensitive zone PhDk and an integer M, greater than or equal to 2, of memory nodes $MN_{k,m}$, m varying from 1 to M;

.- a subsystem for image readout (62) of M memory nodes $MN_{k,m}$ of each Pix#k, k varying from 1 to Nk, to establish, by analogue-to-digital conversion, Nk times M digital values, representative of charge quantities generates by the photosensitive zones PhDk, k varying from 1 to Nk, and integrated by the M memory nodes $MN_{k,m}$ for an exposure image duration of the pixel, less than or equal to a predetermined maximum exposure image duration Tmax_exp, and providing, at the output, M times Nk digital values read;

.- a subsystem for image pre-processing (64) configured to apply digital processings to said digital values provided at the output by the image readout subsystem, and to send pixel pre-processed image data to an application system for determining the indirect time of flight IToF of an observed scene;

the image sensor being **characterised in that** it comprises:

.- a subsystem (66) for fast readout of Nk times M memory nodes $MN_{k,m}$ and for controlling an inhibition mechanism of the exposure of the Nk pixels Pix#k, configured to, on each of the Nk pixels Pix#k, k varying from 1 to Nk: performing during a current cycle Cycle_acq#k,s of acquiring an image of the Nk pixels of the sensor, a predetermined integer Nr of non-destructive fast readouts FCr, r varying from 0 to Nr-1, voltages present on the M memory nodes $MN_{k,m}$, m varying from 1 to M, and after each fast readout FCr, determining an inhibition signal of the exposure of the pixel Pix#k, from a decision criterion to follow or not the exposure of the pixel Pix#k, the decision criterion being a function of the voltage values read non-destructively on the M memory nodes $MN_{k,m}$ after said fast readout FCr; and

.- in each pixel Pix#k, at least one inhibition transistor ($TI_{k,1}...TI_{k,m}$, $TI_k$) of the exposure of the pixel and a memory point ($IM_k$) being able to be charged or discharged by said inhibition signal of the pixel Pix#k in order to activate or deactivate the inhibition mechanism of the pixel by controlling its inhibition transistor(s).

2. CMOS and multiple node active pixel image sensor for measuring distance in indirect time of flight IToF according to claim 1, wherein

each pixel (102; 302) Pix#k, k varying from 1 to Nk, is configured to integrate through its M memory nodes $MN_{k,m}$, m varying from 1 to M, the electric charges generated by the photosensitive zone PhDk during r integration basic intervals INTr, r varying from 0 to Nr-1, each integration basic interval INTr being followed by a fast readout FCr of the M memory nodes $MN_{k,m}$ and of a reevaluation of the inhibition decision criterion, and

the r integration intervals INTr, distributed in the current cycle Cycle_acq#s for acquiring a pixel image, respectively have basic durations Tr such that the sum of the integration basic durations Tr, r varying from 0 to Nr-1, is equal to the predetermined maximum exposure image duration Tmax_exp.

3. CMOS and multiple node active pixel image sensor for measuring distance in indirect time of flight IToF according to claim 2, wherein

the basic durations Tr, r varying from 0 to Nr, are equal to one same value; or
at least two basic durations taken from among the set of values Tr, r varying from 0 to Nr-1 are different and the distribution of the values Tr, r varying from 0 to Nr-1 is chosen, so as to make the dynamic of the sensor maximum.

4. CMOS and multiple node active pixel image sensor for measuring distance in indirect time of flight IToF according to any one of claims 1 to 3, comprising a sequencer (72) for activating phases of a set of phases implemented during the current cycle Cycle_acq#s through the sending of controls to the Nk pixels, k varying from 1 to Nk, to the subsystem for fast readout of Nk times M memory nodes $MN_{k,m}$ and for controlling the inhibition mechanism of the exposure of the Nk pixels Pix#k, to the image pre-processing subsystem, said set of phases comprising:

.- for each pixel (102 ; 302) Pix#k, k varying from 1 to Nk, reinitialisation phases (Reset or Rst) of the photosensitive zone PhDk and of the M memory nodes $MN_{k,m}$, m varying from 1 to M, of the non-destructive fast readout phases of the M memory nodes (FCr), an initial exposure phase (exp0) of the pixel Pix#k followed by a first number Nr1 (k,s) of phase(s) for maintaining the exposure (Exp) of the pixel Pix#k, then a number Nr2(k,s) of inhibition phases (Blocked) of the exposure of the pixel Pix#k, the sum of the numbers Nr1 (k,s) and Nr2(k, s) being equal to Nr-1, and of an image readout phase (Read) of the pixel Px#k; and
.- the reinitialisation phases (Reset or Rst) of the photosensitive zones PhDk and of the M memory nodes $MN_{k,m}$, k varying from 1 to Nk and m varying from 1 to M are executed at the same time at each image acquisition according to a "Global Shutter" mode of the Nk pixels of the image sensor.

5. CMOS and multiple node active pixel image sensor for measuring distance in indirect time of flight IToF according to claim 4, wherein for each pixel (102; 302) Pix#k, k varying from 1 to Nk, an image readout is performed after a reinitialisation phase of the photosensitive zone PhDk and of the M memory nodes $MN_{k,m}$, m varying from 1 to M, said image readout being used to perform an external CDS.

6. CMOS and multiple node active pixel image sensor for measuring distance in indirect time of flight IToF according to any one of claims 1 to 4, wherein each pixel (102;302) Pix#k, k varying from 1 to Nk, configured according to one same architecture, comprises:

   - the photosensitive zone PhDk,
   - a transistor T1k for reinitialising the photosensitive zone PhDk at the start of each cycle for acquiring an image and at the start or at the end of each microintegration cycle, the first transistor T1k being controlled by a global reinitialisation signal RPhk common to the Nk pixels of the set of pixels;
   .- M memory nodes $MN_{k,m}$,

      m varying from 1 to M, of shared storage on M
      storage paths $VS_{k,m}$ of the charges generated by the photosensitive zone PhDk, and integrated in parallel for the exposure duration of the pixel Pix#k corresponding to the current cycle Cycle_acq#k,s for acquiring an image;

   .- a synchronous device (104; 304) for blocking the exposure of the pixel Pix#k common to the different M memory nodes Mk,m, m varying from 1 to M;
   .- a device (106; 306) for activating the access of the pixel Pix#k to the fast readout subsystem (66) of Nk times M memory nodes and for controlling the inhibition mechanism of the Nk pixels and the subsystem for the image readout of the M memory nodes of the pixel Pix#k via M conductors for independent access of readout $COL_{k,m}$, m varying from 1 to M, and a path for accessing the inhibition control $COL_{k,IM}$.

7. CMOS and multiple node active pixel image sensor for measuring distance in indirect time of flight IToF according to claim 6, wherein each pixel (102; 302) Pix#k, k varying from 1 to Nk, each storage path $VS_{k,m}$, m varying from 1 to M, of charges generated by the photosensitive zone PhDk comprises:

   .- a charge transfer transistor $T2_{k,m}$, configured to empty in the memory node $MN_{k,m}$ the charges generated for the exposure image duration of the pixel Pix#k, and controlled by a charge transfer control signal $TRA_{k,m}$;
   .- a transistor $T3_{k,m}$ for reinitialising the memory node $MN_{k,m}$, configured to reinitialise the potential of the memory node $MN_{k,m}$ at the start of the current cycle Cycle_acq#k,s of an image, and controlled by a reinitialisation signal by an RST signal common to the set of Nk pixels;
   .- a transistor $T4_{k,m}$ for the readout of the memory node $MN_{k,m}$ mounted on the follower and configured to transfer from its gate to its source, the potential level of the memory node $MN_{k,m}$; and
   .- a selection transistor $T5_{k,m}$, connected to the source of the transistor $T4_{k,m}$ for the readout of the memory node $MN_{k,m}$, configured to transfer to the access conductor $COL_{k,m}$ in readout by the subsystem for the image readout of the M memory nodes of the pixel Pi#k, the potential of the charge memory node $MN_{k,m}$, and controlled by a control signal $SEL_k$ for accessing the pixel Pix#k.

8. CMOS and multiple node active pixel image sensor for measuring distance in indirect time of flight IToF according to claim 7, wherein, for each pixel (102) Pix#k, k varying from 1 to Nk, the synchronous device (104) for blocking the exposure of the pixel Pix#k, common to the different M memory nodes $MN_{k,m}$, m varying from 1 to M:

   .- is configured to modulate the control signals $TRA_{k,m}$, m varying from 1 to M, for transferring the charges generated for the exposure image duration of the pixel Pix#k, by a common modulating signal for inhibiting the transfer of the charges by the charge transfer transistors $T2_{k,m}$, activated when the subsystem (66) for fast readout of Nk times M memory nodes and for controlling the inhibition mechanism of the Nk pixels has decided, following the values read during previous non-destructive fast readouts, to not continue the exposure of the pixel, and maintained until the full readout of the pixel, and
   .- comprises, for each path $VS_{k,m}$, m varying from 1 to M, for storing the charges generated by the photosensitive zone PhDk, a said transistor $TI_{k,m}$ for inhibiting the charge transfer control signal $TRA_{k,m}$.

9. CMOS and multiple node active pixel image sensor for measuring distance in indirect time of flight IToF according to claim 7, wherein, for each pixel (102) Pix#k, k varying from 1 to Nk, the synchronous device (304) for blocking the exposure of the pixel Pix#k, common to the different M memory nodes $MN_{k,m}$, m varying from 1 to M:

.- is configured to modulate the discharge of the charges generated by the photosensitive zone for the exposure image duration of the pixel Pix#k to a common node for connecting the M charge transfer transistors $T2_{k,m}$, m varying from 1 to M, by a common modulating signal for inhibiting the discharge of the charges to said common connecting node, activated when the subsystem (66) for fast readout of Nk times M memory nodes and for controlling the inhibition mechanism of the Nk pixels has decided, following the values read during previous non-destructive fast readouts, to not continue the exposure of the pixel (302) Pix#k, and maintained until the full readout of the pixel, and
.- comprise, mounted in parallel of the transistor T1k for reinitialising the photosensitive zone PhDk, a said transistor $TI_k$ for inhibiting the discharge of the charges generated by the photosensitive zone PhDk to said common node.

10. CMOS and multiple node active pixel image sensor for measuring distance in indirect time of flight IToF according to any one of claims 7 to 9, wherein the memory point ($IM_k$) of the inhibition mechanism is accessed via a transistor controlled by the control signal $SEL_k$.

11. CMOS and multiple node active pixel image sensor for measuring distance in indirect time of flight IToF according to any one of claims 1 to 4,

.- wherein the Nk pixels, k varying from 1 to Nk, are arranged in a matrix form (54) according to an integer Nl, greater than or equal to 2, of line(s), and an integer Ne, greater than or equal to 2, of columns, Nk being equal to the product of Ne and Nl; and
.- further comprising a line decoder (68), configured to access, line by line, on predetermined time windows, at the same time, the pixels of one same line l to the processing resources of the full-resolution image readout subsystem (62) and of the fast and non-destructive subsystem (66) of Ne times M memory nodes $MN_{k,m}$ and for controlling the exposure inhibition mechanism of the Ne pixels of said same line l, and to thus pool the processing resources of the full-resolution image readout subsystem (62) and of the fast readout subsystem (66) and for controlling the exposure inhibition mechanism of the pixels, column by column.

12. Apparatus for measuring distance in indirect time of flight IToF of a two- or three-dimensional object scene, comprising:

.- a source (8) for emitting a series of light pulses;
.- a CMOS and multiple node active pixel image sensor (12; 52) according to any one of claims 1 to 10, for converting the light pulses reflected by the objects of the scene (6) into pixel data characterising one or more images; and
.- a block (14) for processing pixel data from the image(s) to determine a depth field of the objects of the scene (6), seen from a placement, where the light source (8) and the image sensor (12; 53) are located.

13. Method for implementing a CMOS and multiple memory node active pixel image sensor for measuring distance in indirect time of flight IToF of an observed scene,

the image sensor (52) comprising:

.- a set of an integer Nk, greater than or equal to 1, of CMOS active pixel(s) (102; 302) Pix#k, k varying from 1 to Nk, each having a photosensitive zone PhDk and an integer M, greater than or equal to 2, of memory nodes $MN_{k,m}$, m varying from 1 to M;
.- a subsystem (66) for the non-destructive readout of Nk times M memory nodes $MN_{k,m}$ and for controlling the exposure inhibition mechanism of the Nk pixels Pix#k, implemented during the acquisition of an image by the Nk pixels;
.- a subsystem (62) for the image readout of the M memory nodes $MN_{k,m}$ of each pixel Pix#k, k varying from 1 to Nk;
.- an image pre-processing subsystem (64);

the method for implementing the image sensor during the acquisition of an image comprising steps, during which:

.- the subsystem for image readout (62) reads the M memory nodes $MN_{k,m}$ of each pixel (102; 302) Pix#k, k varying from 1 to Nk, establishes, by analogue-to-digital conversion, Nk times M digital values, representative of charge quantities generates by the photosensitive zones PhDk, k varying from 1 to Nk, and integrated by the M memory nodes $MN_{k,m}$ for an exposure image duration of the pixel, less than or equal to a predetermined maximum exposure image duration Tmax_exp, and providing, at the output, M times Nk digital values read;

.- the subsystem for image pre-processing (64) applies digital processings to said digital values provided at the output by the image readout subsystem (62), and sends pixel pre-processed image data to an application system for determining the indirect time of flight IToF of an observed scene; and

the method for implementing the image sensor being **characterised in that**:

.- the subsystem (66) for non-destructive fast readout of Nk times M memory nodes $MN_{k,m}$ and for controlling an inhibition mechanism of the exposure of the Nk pixels Pix#k, on each of the Nk pixels Pix#k, k varying from 1 to Nk: performs during a current cycle Cycle_acq#k,s of acquiring an image s, a predetermined integer Nr of non-destructive fast readouts FCr, r varying from 0 to Nr-1, voltages present on the M memory nodes $MN_{k,m}$, m varying from 1 to M, and after each fast readout FCr, determines an inhibition signal of the exposure of the pixel Pix#k, from a decision criterion to follow or not the exposure of the pixel Pix#k, the decision criterion being a function of the voltage values read non-destructively on the M memory nodes $MN_{k,m}$ after said fast readout FCr and of one or more decision thresholds; and

.- the inhibition signal of each pixel Pix#k, charges or discharges an inhibition memory point (IMk) of the pixel Pix#k in order to activate or deactivate the inhibition mechanism of the pixel by controlling at least one inhibition transistor ($TI_{k,1...}TI_{k,m}$, $TI_k$) of the exposure of the pixel.

## FIG.1

## FIG.2

FIG.3

FIG.4

FIG.5

EP 4 186 227 B1

EP 4 186 227 B1

| | | | | | | | | | | | | | | | | |
|---|---|---|---|---|---|---|---|---|---|---|---|---|---|---|---|---|
| **Etat** | Réinit | Lecture Noir #s | Exposition = s | | | | | | | | // | Lecture Signal #s | Rst | Exposition = s +1 | | |
| **Pix(0)** | Réinit | Lecture Noir #s | Exp0 | FC0 | Bloqué | FC1 | Bloqué | FC2 | Bloqué | FC3 | // Bloqué | Lecture Signal #s | Rst | Exp0 | FC0 | Bl |
| **Pix(n1)** | Réinit | Lecture Noir #s | Exp0 | FC0 | Exp1 | FC1 | Bloqué | FC2 | Bloqué | FC3 | // Bloqué | Lecture Signal #s | Rst | Exp0 | FC0 | Exp1 |
| **Pix(n2)** | Réinit | Lecture Noir #s | Exp0 | FC0 | Exp1 | FC1 | Exp2 | FC2 | Bloqué | FC3 | // Bloqué | Lecture Signal #s | Rst | Exp0 | FC0 | Exp1 |
| **Pix(n3)** | Réinit | Lecture Noir #s | Exp0 | FC0 | Exp1 | FC1 | Exp2 | FC2 | Exp3 | FC3 | // Bloqué | Lecture Signal #s | Rst | Exp0 | FC0 | Exp1 |
| ⋮ | | | | | | | | | | | | | | | | |
| **Pix(n$_r$-1)** | Réinit | Lecture Noir #s | Exp0 | FC0 | Exp1 | FC1 | Exp2 | FC2 | Exp3 | FC3 | // Bloqué | Lecture Signal #s | Rst | Exp0 | FC0 | Exp1 |
| **Pix(Nn)** | Réinit | Lecture Noir #s | Exp0 | FC0 | Exp1 | FC1 | Exp2 | FC2 | Exp3 | FC3 | // ExpNr | Lecture Signal #s | Rst | Exp0 | FC0 | Exp1 |

FIG.6

FIG.7

FIG.8

Débit trame & debit données versus nombre de
trames pour HDR
(avec & sans architecture invention)

FIG.9

Débit trame & debit données versus durée de
lecture rapide
(avec & sans architecture invention)

FIG.10

EP 4 186 227 B1

FIG.11

33

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016182847 A
- US 2017227643 A1
- US 20100268938 A1